# EUROPEAN PATENT SPECIFICATION

(11) **EP 0 953 501 B1**
(45) Date of publication and mention of the grant of the patent: **14.05.2008**
(21) Application number: 99108251.2
(22) Date of filing: 27.04.1999
(51) Int. Cl.: B62K 11/00, B62K 11/10, B62M 7/12, F02F 1/28

(54) **Engine cooling stricture for scooter type vehicle**
Motorkühlungsstruktur für motorrollerartiges Fahrzeug
Structure de refroidissement du moteur d'un véhicule du type scooter

(30) Priority: 27.04.1998 JP 13268898
(43) Date of publication of application: 03.11.1999
(73) Proprietor: Yamaha Hatsudoki Kabushiki Kaisha, Iwata-shi, Shizuoka-ken (JP)
(72) Inventor: Matsumoto, Yoshiharu c/oYamaha Hatsudoki K. K., Iwata-shi, Shizuoka-ken (JP)
(74) Representative: Grünecker, Kinkeldey, Stockmair & Schwanhäusser Anwaltssozietät

(56) References cited:
- FR-A- 2 748 702
- US-A- 4 733 639
- PATENT ABSTRACTS OF JAPAN vol. 1995, no. 07, 31 August 1995 (1995-08-31) & JP 07 096878 A (SUZUKI MOTOR CORP), 11 April 1995 (1995-04-11)
- PATENT ABSTRACTS OF JAPAN vol. 017, no. 377 (M-1446), 15 July 1993 (1993-07-15) & JP 05 065086 A (SUZUKI MOTOR CORP), 19 March 1993 (1993-03-19)
- PATENT ABSTRACTS OF JAPAN vol. 017, no. 038 (M-1358), 25 January 1993 (1993-01-25) & JP 04 257783 A (HONDA MOTOR CO LTD), 11 September 1992 (1992-09-11)

## Description

This invention relates to a scooter type of vehicle according to the preamble of independent claim 1.
Such a scooter type vehicle can be taken from prior art document US 4,733,639. In particular, said document teaches a motor vehicle having a swingable power unit supported on the vehicle frame. Said power unit is provided with a casing having a port which is part of an intake passage means including a flexible connecting pipe and an air Intake pipe, wherein said air intake pipe is provided with an intake opening positioned behind a front cover, which is located below the handle bar and covers the steering device of the vehicle.
Prior art document FR 2 748 702 A1 teaches a scooter air intake structure supports an air filter in the upper part of a transmission box of an engine unit. Air is induced into the filter through an air inlet duct. An opening is made In a bodywork panel covering a side of the scooter behind the footrest floor and below a seat. The inlet duct is connected to an Inlet air chamber located on an internal face of the bodywork panel opposite the panel opening. The Inlet air chamber has an Inlet opening in its side part and an outlet opening in its upper part. The outlet opening is connected to the Inlet air duct.

The scooter type vehicle conventionally employs a V-belt transmission disposed on the engine side and housed in a belt chamber where temperature rises due to the heat transmitted from the engine and the heat produced by the friction of the V-belt.

Therefore, in the scooter type vehicle of the 50 cc class, the V-belt pulley is provided with vanes to stir air in the belt chamber and restrict local temperature rise in the belt chamber.

However, since such an arrangement is not enough for engines of a larger displacement, an external air introducing duct is connected to the engine to introduce external air into the belt chamber for cooling.

However, since such a conventional arrangement introduces external air through the external air introducing duct into the belt chamber, it may be possible that dust and hot air are introduced through the duct. Furthermore, since the external air introducing duct is connected to the unit swing type engine, measures must be taken to preclude adverse effects even if the engine swings up and down.
It is an object of the present invention to provide a scooter type vehicle as indicated above, wherein the introduction of dust and hot air is restricted and adverse effects are prevented even if the engine swings up and down. According to the subject matter of the present invention, said objective is solved by a scooter type vehicle having the features of independent claim 1. Preferred embodiments are laid down in the dependent claims.
Hereinafter, the present invention is illustrated and explained by means of preferred embodiments in conjunction with the accompanying drawings. In the drawings, wherein:

FIG. 1 is an overall side view showing the general constitution of a scooter type of vehicle related to the embodiment of the present teaching.
FIG. 2 is an overall side view showing the general constitution of the scooter type of vehicle related to the same embodiment.
FIG. 3 is an overall plan view showing the general constitution of the scooter type of vehicle related to the same embodiment.

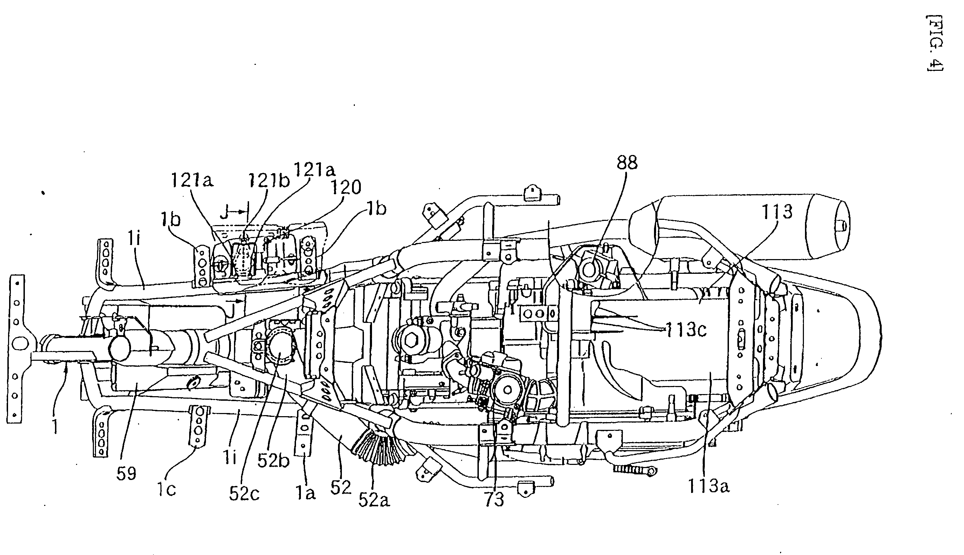

FIG. 4 is an overall plan view showing the general constitution of the scooter type of vehicle related to the same embodiment.
FIG. 5 is a plan view of the scooter type of vehicle related to the same embodiment in the state of the seat being removed.
FIG. 6 is a side view of the same embodiment with the covers being combined together.

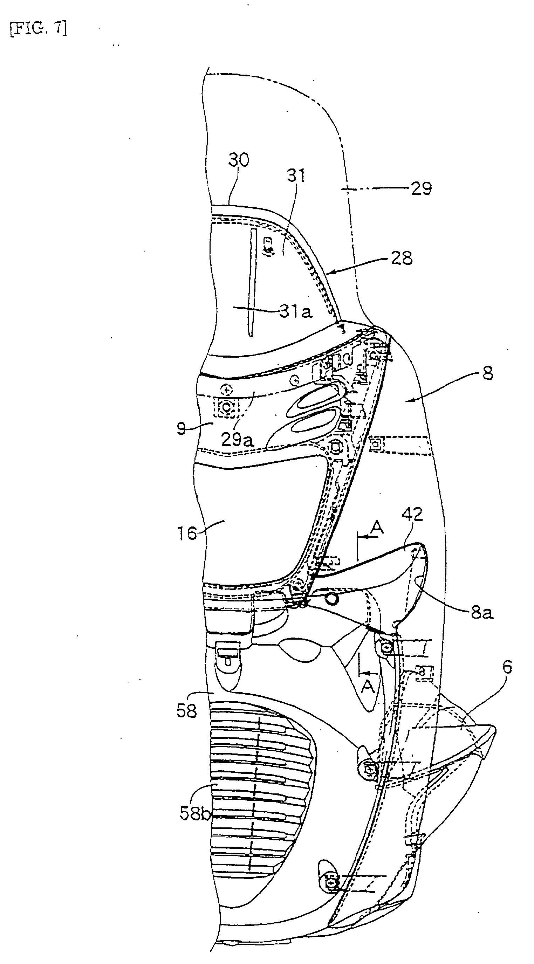

FIG. 7 is a front view of the same embodiment with the covers being combined together.
FIG. 8 is a side view of the same embodiment with the covers being removed.
FIG. 9 is a side view, partially broken away, of the same embodiment showing the seat and others.
FIG. 10 is a plan view showing the frame of the same embodiment.
FIG. 11 is a side view showing the frame of the same embodiment.
FIG. 12 is a plan view showing part of the footrest board of the same embodiment.
FIG. 13 is an exploded perspective view of the front part of the vehicle related to the same embodiment.
FIG. 14 is a view of the inside of the handlebar cover as seen from the front of the vehicle of the same embodiment.
FIG. 15 is a view of meters as seen from a rider of the same embodiment.
FIG. 16 is a view of the screen, meter visor, etc. as seen sideways of the same embodiment.
FIG. 17 is an exploded perspective view showing the first and second meter visors of the same embodiment.
FIG. 18 is a view showing the front storage compartment and the object hanging hook of the same embodiment.
FIG. 19 is a partially broken away view of the front storage compartment lid of the same embodiment.
FIG. 20 is a side view showing the front fender, etc. of the same embodiment.
FIG. 21 shows a section A-A in FIG. 7 of the same embodiment.
FIG. 22 shows a section B-B in FIG. 6 of the same embodiment.
FIG. 23 is a rear view of the scooter type of vehicle of the same embodiment.
FIG. 24 is a plan view showing part of the engine of the same embodiment.
FIG. 25 is a side view of the rear damper and the muffler of the same embodiment.
FIG. 26 is a plan view of the rear damper and the muffler of the same embodiment.
FIG. 27 is a view of the rear damper with its right half in cross section of the same embodiment.
FIG. 28 is a side view of piping for the radiator, etc. of the same embodiment.

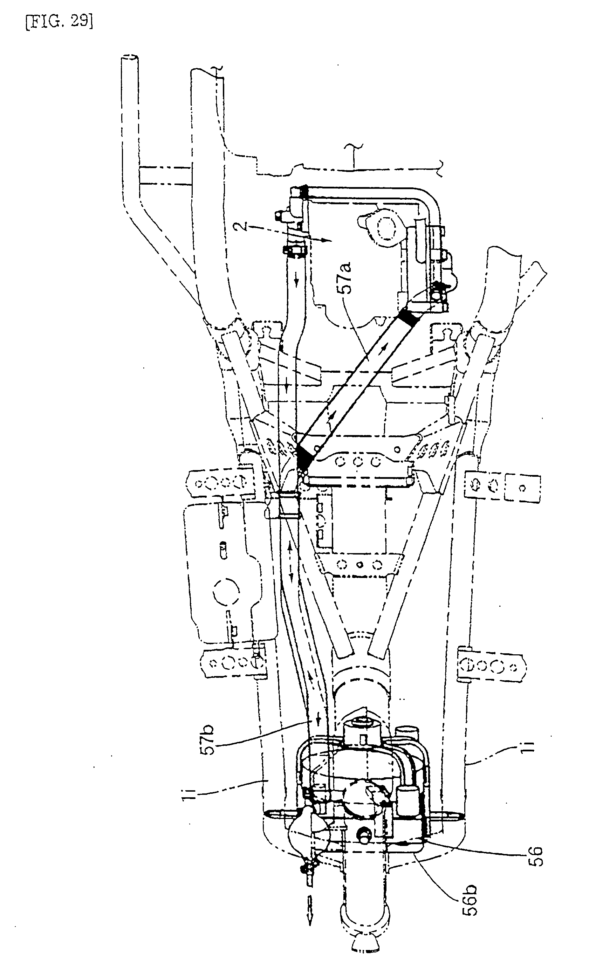

FIG. 29 is a plan view of piping for the radiator, etc. of the same embodiment.
FIG. 30 is a front view as seen in the direction of the arrow C in FIG. 28.
FIG. 31 is a side view of the front part of the scooter type of vehicle of the same embodiment.
FIG. 32 is a plan view of the battery compartment portion of the same embodiment.
FIG. 33 shows a cross section D-D in FIG. 32 of the same embodiment.
FIG. 34 is a plan view of the area where the fuel tank is disposed of the same embodiment.
FIG. 35 is a side view of the area where the fuel tank is disposed of the same embodiment.
FIG. 36 shows a cross section E-E in FIG. 9 of the same embodiment.
FIG. 37 shows a cross section F-F in FIG. 9 of the same embodiment.
FIG. 38 shows a cross section G-G in FIG. 9 of the same embodiment.
FIG. 39 is a side view roughly showing the helmet hanger of the same embodiment.
FIG. 40 is a plan view roughly showing the helmet hanger of the same embodiment.
FIG. 41 is a side view of the rear fender of the same embodiment.
FIG. 42 is a plan view of the rear fender of the same embodiment.
FIG. 43 shows a cross section H-H in FIG. 42 of the same embodiment.
FIG. 44 is a view as seen in the direction of the arrow I in FIG. 42 of the same embodiment.
FIG. 45 is a front view of the second water prevention flap, etc. of the same embodiment.
FIG. 46 shows a cross section J-J in FIG. 4 of the same embodiment.
FIG. 47 shows a cross section K-K in FIG. 5 of the same embodiment.
FIG. 48 is a plan view of the side molding of the same embodiment.
FIG. 49 shows a cross section L-L in FIG. 48 of the same embodiment.
The embodiment is illustrated in FIGs. 1 to 49. The whole of the scooter type of vehicle including the part related to the present teaching will be described using the embodiment.

The scooter type vehicle in this embodiment generally comprises a vehicle body frame 1 (hereinafter simply referred to as frame 1), a swing unit type engine 2 connected for up and down swinging to the frame 1, a front wheel 3 disposed in the front part of the vehicle, and a rear wheel 4 disposed on the side of the swing unit type engine 2.

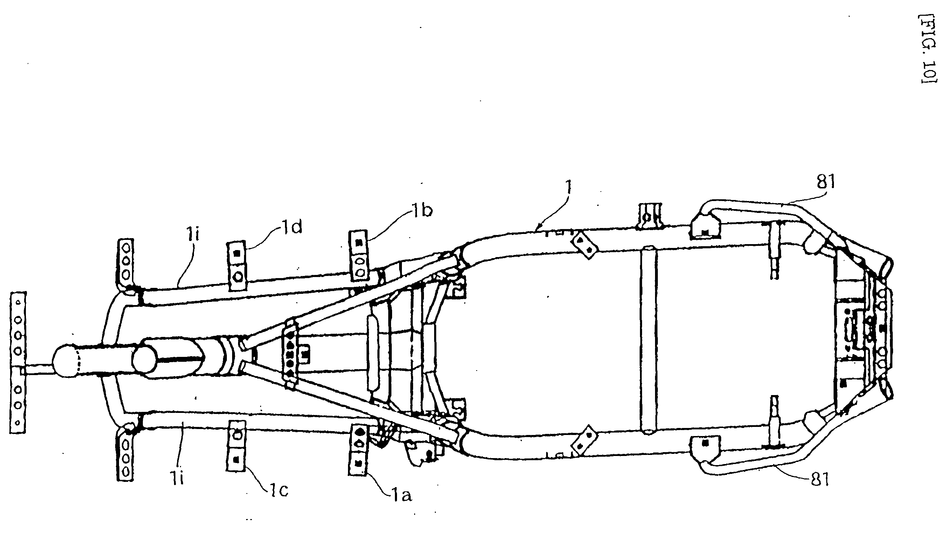

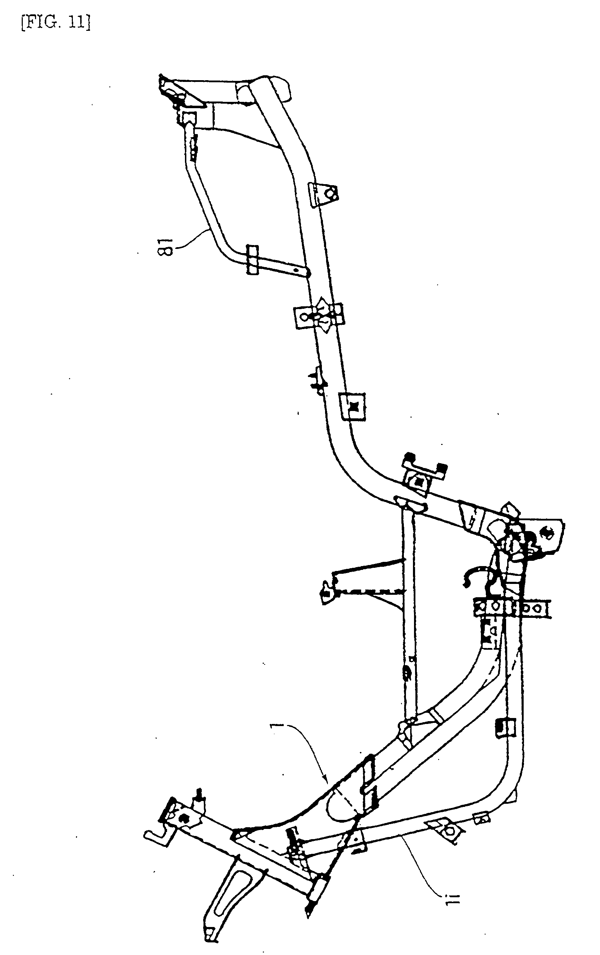

The frame 1 serving as a framework is constituted as shown in FIGs. 10 and 11 by combining together a plural number of pipes, and covered with a plural number of covers.

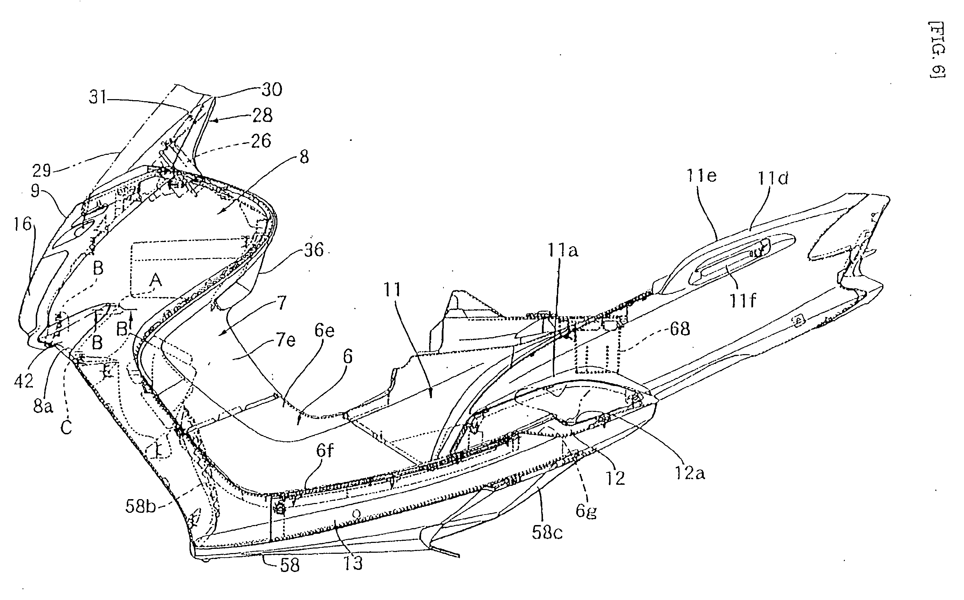

Specifically, first as shown in FIG. 6, assuming a footrest board 6 serving as a "central cover" placed in the middle in the vehicle's front-rear direction of the frame 1 to be a reference, a leg shield 7, a front panel 8, and a front molding 9 serving as "other covers" are installed in order on the front side of the footrest board 6. A side cover 11 and a tandem footstep 12 as "other covers" are installed on the rear side of the footrest board 6. Further, side moldings 13 are installed on the lateral sides of the footrest board 6. Under those covers is disposed a lower cover 58.

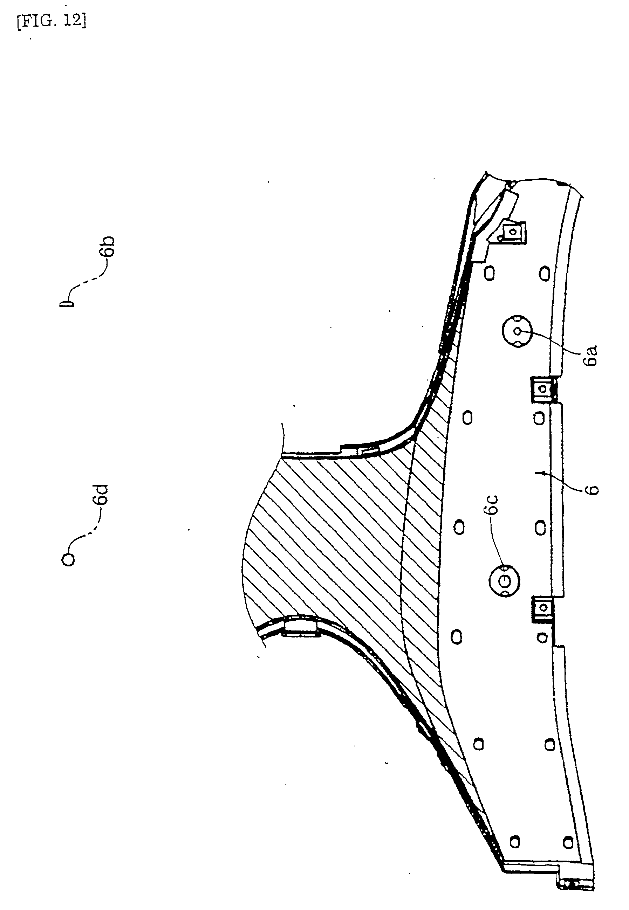

The footrest board 6 as shown in FIG. 12 has a reference bolt hole 6a on the left side as seen from the rear of the vehicle and an elongate hole 6b elongate in the vehicle width direction and located opposite the hole 6a, on the right side beyond the center line. Unloaded holes 6c and 6d are formed in front of the reference bolt hole 6a and the elongate hole 6b.

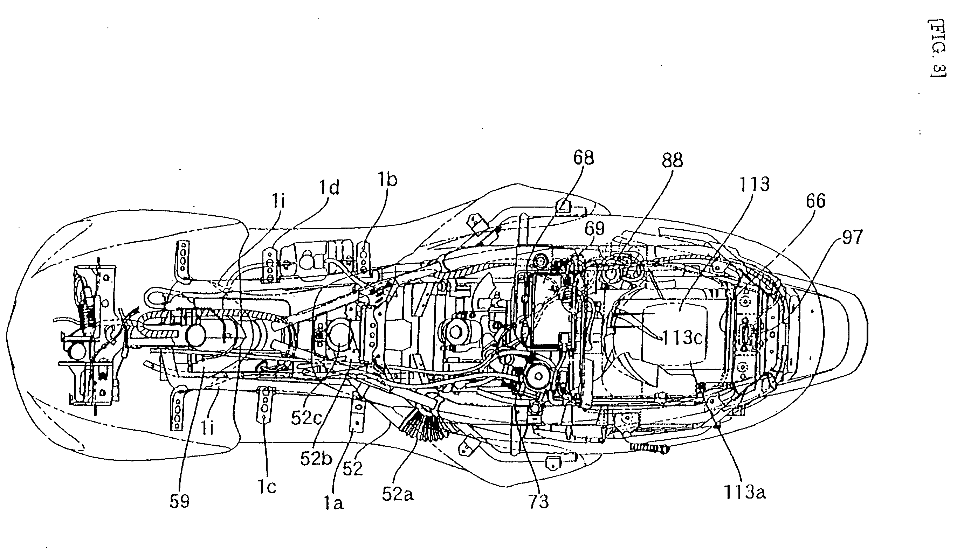

A bolt (not shown) provided to project from a stay 1a shown in FIGs. 3, 10, etc. is passed through the reference bolt hole 6a to secure the footrest board 6 by thread tightening. Since the reference bolt hole 6a and its thread are made with approximately the same diameter, the positioning of the footrest board 6 is determined in the right-left and front-rear directions, but not in the rotating direction about the reference bolt hole 6a.

Similarly, bolts (not shown) projecting from stays 1b, 1c, and 1d are passed through the elongate hole 6b and the unloaded holes 6c and 6d to secure the footrest board 6 by thread tightening. As the bolt is secured in the elongate hole 6b by thread tightening, the positioning in the rotating direction is determined.

In this way, the footrest board 6 is installed in position on the frame 1.

Next, assuming the footrest board 6 to be a reference, the leg shield 7 is positioned with respect to the front edge of the footrest board 6 and secured to the frame 1 by thread tightening. The attachment of the leg shield 7 is arranged that (although not shown) even if slight displacement is caused when the bolts are inserted into the loose hole, the displacement is absorbed.

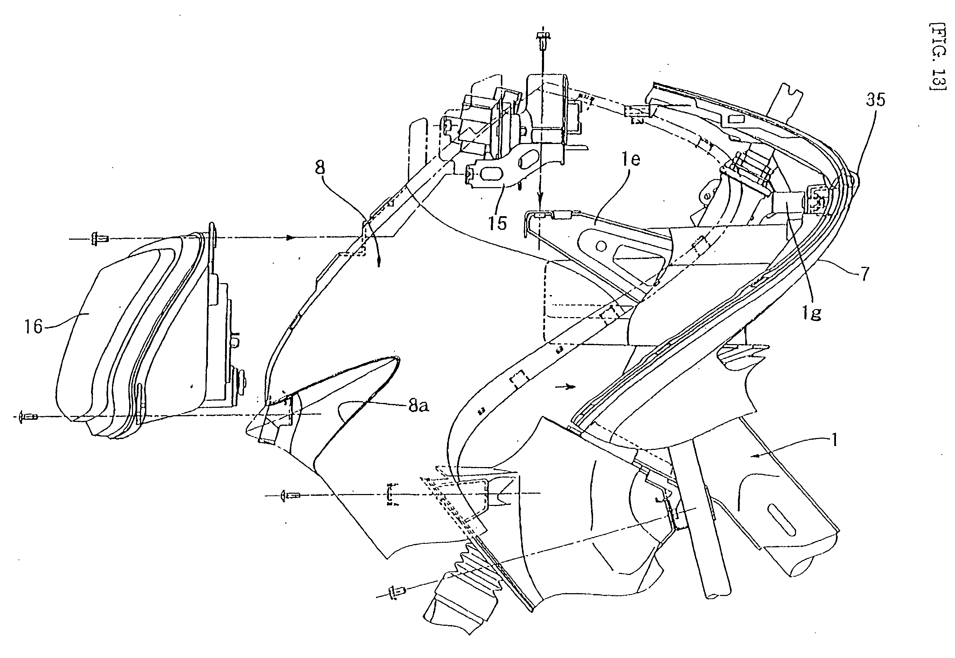

As shown in FIG. 13, a stay 15 is temporarily secured, to the extent that it can be moved by hand, to a bracket 1e fixed to the frame 1, the front panel 8 is temporarily placed, and the front panel 8 and a headlight 16 are temporarily secured to the stay 15. After that, the headlight 16 is secured to the front panel 8 using screws, and the front panel 8 is secured to the leg shield 7 using screws while using the leg shield as a reference.

Next, the stay 15, the headlight 16, and the front panel 8 are securely tightened together. After that, the stay 15 and the bracket 1e are securely tightened together.

On the other hand, the side cover 11 behind the footrest board 6 is installed, in the state of being positioned in reference to the footrest board 6 with its displacement being absorbed by the use of unloaded holes, etc. (not shown).

In this way, since the footrest board 6 is used as a reference and other covers are attached in order before and behind the footrest board 6, assembly accuracy is improved with less errors in front and rear end portions in comparison with the installation made in reference to the front end or the rear end.

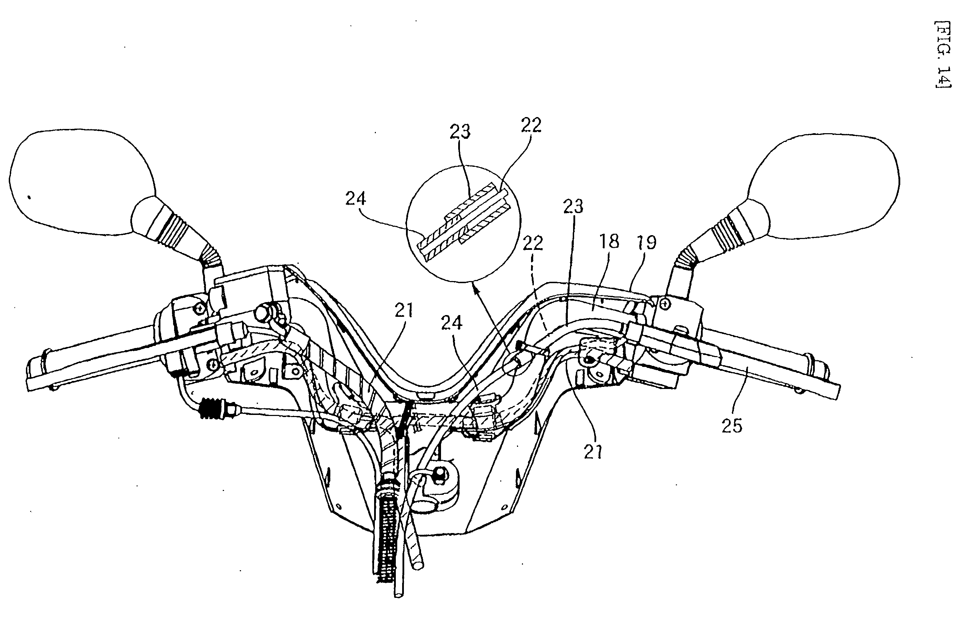

Handlebars 18 for free steering are supported on a head pipe 1f formed in the front part of the frame 1. The handlebars 18 are covered with a handlebar cover 19. The handlebars 18 are formed generally in a V-shape. Various wiring harnesses 21 and a brake cable 22 for the rear wheel disk brake are routed through the handlebars 18 (See FIG. 14).

The brake cable 22 is passed through a curved pipe 23 having rigidity and a pipe 24 made of a plastic material. The curved pipe 23 is disposed in the vicinity of the brake lever 25, and the end of the plastic pipe 24 is fitted to connect to the end of the curved pipe 23.

When the brake cable is pulled as the brake lever is operated, the cable 22 moves within and relative to the pipes 23 and 24 to apply the braking operation of the disk brake.

As the brake cable 22 is passed through the curved pipe 23 having rigidity, it is possible to route the brake cable 22 even through the handlebar cover 19 is curved with a large angle or V-shape. As a result, external appearance quality is secured as the brake cable 22, etc. are not exposed outside the handlebar cover 19.

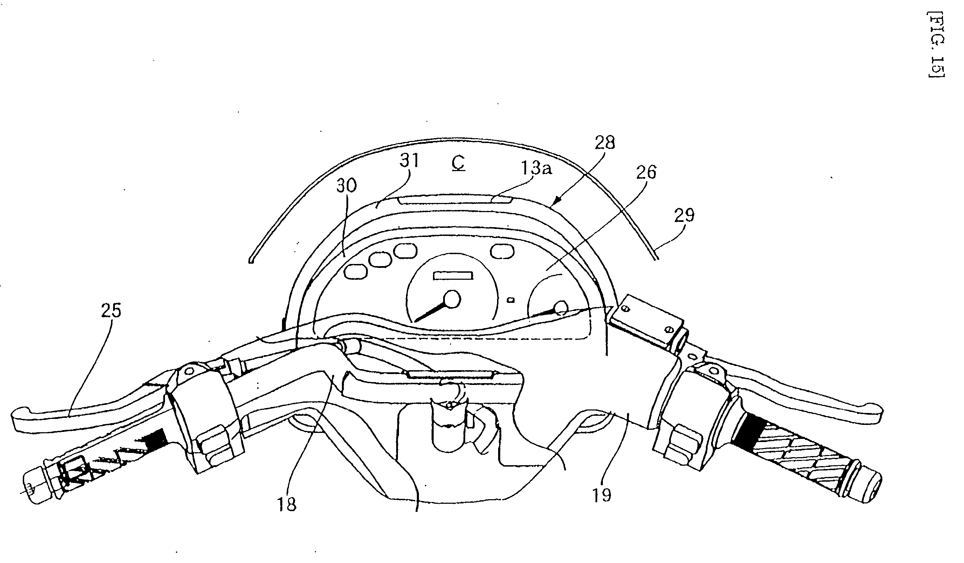

Also, the V-shape of the handlebar cover 19 makes it possible as shown in FIG. 15 to improve external appearance quality while securing the visibility of meters 26 for the rider.

As shown in FIGs. 15, 16, and 17, a meter visor 28 is erected in front of the meters 26. A screen 29 larger than the meter visor 28 is disposed in front of the meter visor 28 with a certain space (c) in between.

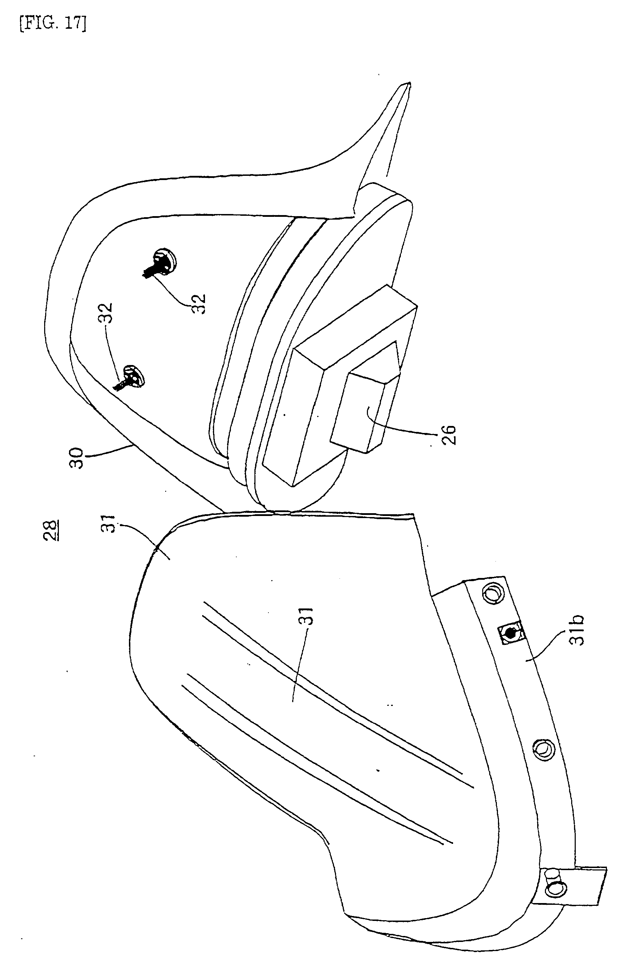

The meter visor 28 is, as shown in FIGs. 17, and others, constituted with a first meter visor 30 and a second meter visor 31. The meters 26 are disposed on the first meter visor 30 and installed as the first and second visors 30 and 31 are tightened together with screws 32.

In the vehicle width center of the outer surface of the second meter visor 30, a recess 31a along the up-down direction is formed.

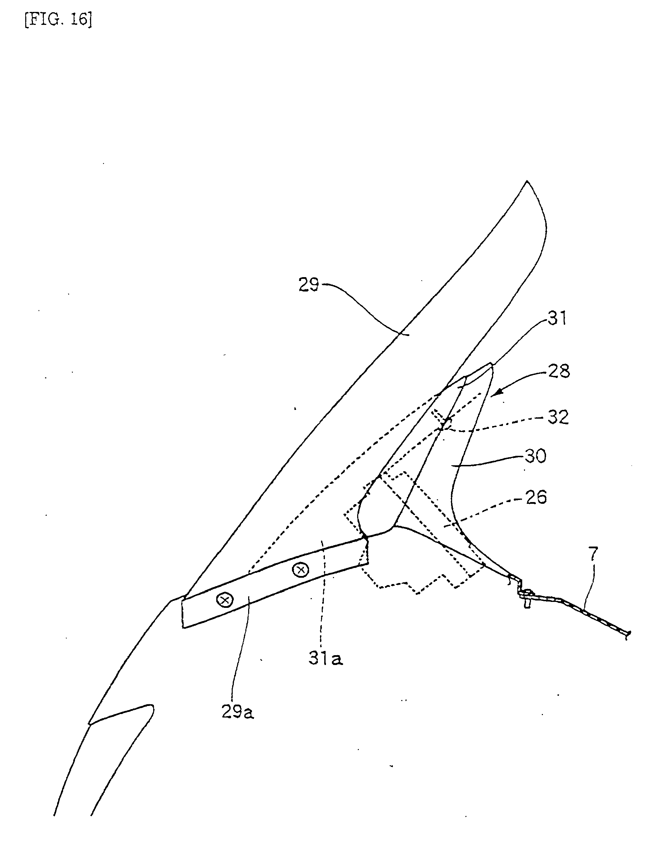

As shown in FIG. 16, the screen 29 is secured such that its lower end portion 29a side is secured with screws to the second meter visor 31, with its cross section being curved generally coaxially with the second meter visor 31.

The meter visor 31 with the meters 26 attached and the screen 29 are made into a subassembly which can be mounted on or removed from the frame 1, the leg shield, etc. In this way, ease of attachment and removal of the meters 26 is improved so that changing components such as the bulb of the speedometer may be made easily.

Since the second meter visor 31 is provided with a recess 31a on the gap (c) side, the space (c) between the visor 31 and the screen 29 is wide in this area, providing easy access to the back of the screen 29 to be cleaned by hand. Furthermore, since the recess 31a is formed in the vehicle width central portion, namely in the deepest portion of the space (c), parts of the reverse side of the screen 29 corresponding to both sides of the recess 31a may be easily cleaned by inserting a hand into the space (c).

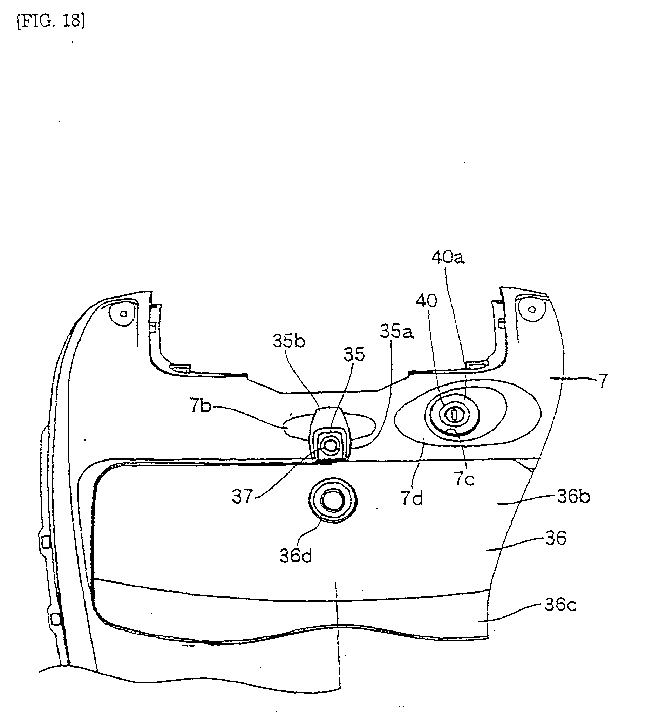

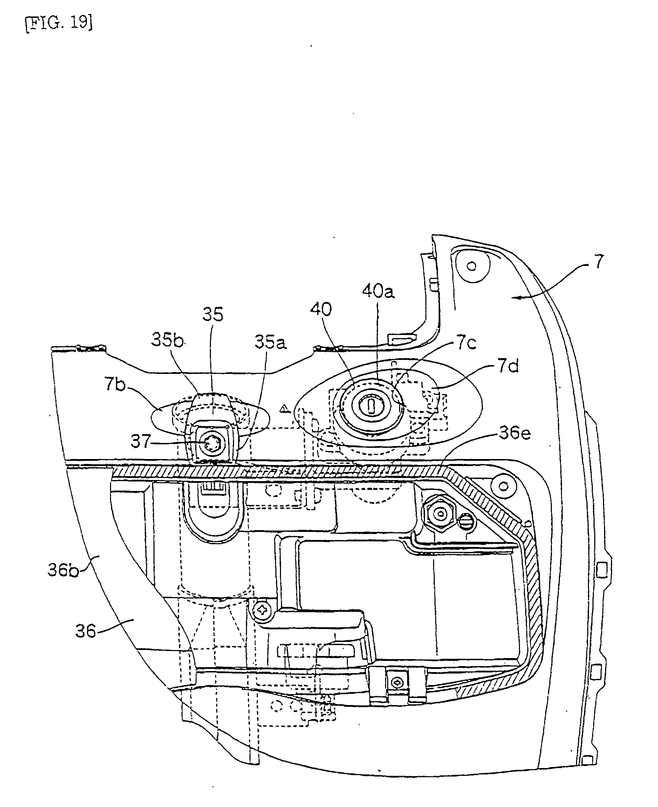

A hook 35 for hanging objects is provided in the front part, above the front objects compartment 36, of the scooter type vehicle (See FIGs. 18, 19, and 20).

The front luggage compartment 36 comprises a compartment body 36a having an luggage storage room and a lid 36b. The lower edge 36e of the lid 36b is hinged for swing-opening and closing the compartment body 36a. The opening brim of the compartment body 36a is provided with a loop of sealing member 36e to seal the compartment as the circumference of the lid 36b comes into contact with the sealing member 36e. A lock device 36d is provided in the upper part of the lid 36b.

The hook 35 for hanging luggage is disposed above the lock device 36d of the lid 36b, and comprises an attachment part 35a secured on the vehicle body side and a hook part 35b extending reaward from the attachment part 35a.

The attachment part 35a is inserted into an attachment recess 7a formed in the leg shield 7, and tightened to a stay 1g secured to the frame 1 together with the leg shield 7 by means of a bolt 37 and a nut 38.

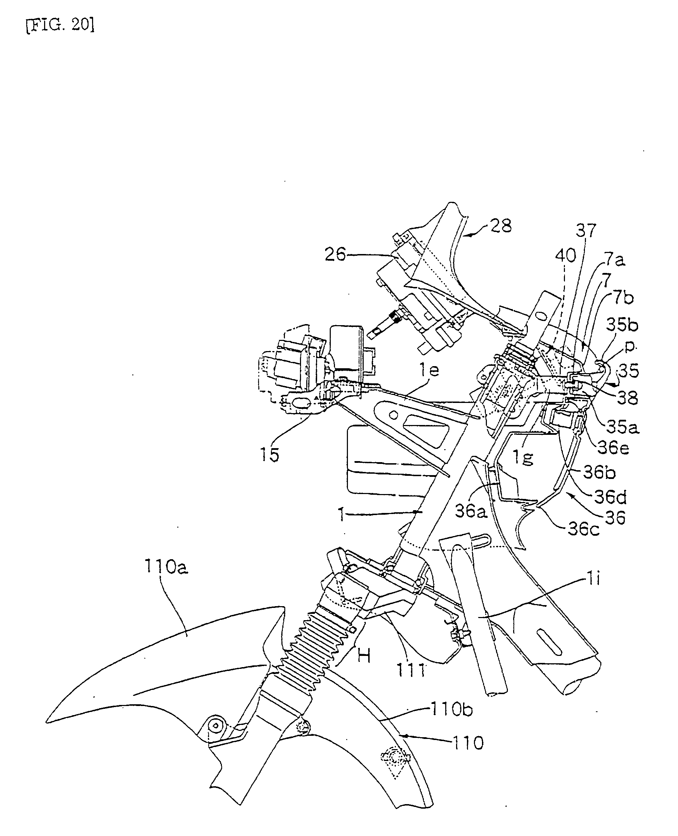

Since the luggage hooking position P (FIG. 20) of the hook 35 is projected rearward beyond the general surface of the lid 36b, the weight of the luggage hung on the hook 35b does not rest directly on the lid 36b and therefore, the seal member 36e, etc. between the lid 36b and the compartment body 36a is less likely to be damaged.

Since the luggage hanging hook 35 is located near the upper side of the lock device 36d and since the area around the lock device 36d of the leg shield 7 has a high rigidity, supporting strength of the hook 35 is also secured. Furthermore, since the leg shield 7 is attached to the stay 1g here, the supporting strength is further increased.

The leg shield 7 is also provided with a smooth-surfaced, beveled portion 7 in the area where the hook 35 is provided. Therefore, a space for hooking a string of luggage may be secured without making the hook 35 project excessively toward the rear.

As shown in FIG. 18, a main switch 40 is attached to the head pipe 1f of the frame 1 on the right of the hook 35 through a bracket 1h. The top end portion 40a of the main switch 40 is exposed out of an opening 7c formed in the leg shield 7 so that a key may be inserted into the key hole of the top end portion 40a for locking and unlocking.

The peripheral area 7d around the opening 7a in the top surface portion of the leg shield 7 is dented down so that water is less likely to find its way into the interior of the main switch 40.

Both sides of front lower part of the front panel 8 are provided with downward opening cuts 8a where front turn signal lamps 42 are disposed.

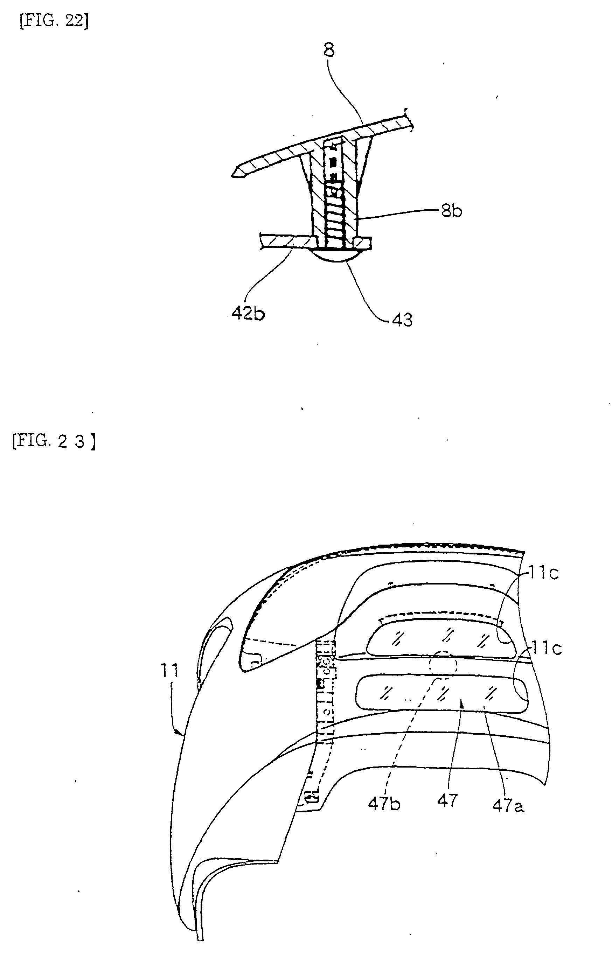

That is, each of the front turn signal lamps 42 is attached to the front panel 8 at three positions (A, B, and C) as shown in FIG. 6. The attachment at the three positions A, B, and C is represented with that of the position A shown in FIG. 22 as an attachment boss 8b projects from the peripheral area of the cut 8a toward the rear. On the other hand, an attachment lug 42b projects from the lamp body 42a of the front turn signal lamp 42. As the attachment lug 42b is secured with a screw 43 to the attachment boss 8b, the front turn signal lamp 42 is disposed to fit into the cut 8a.

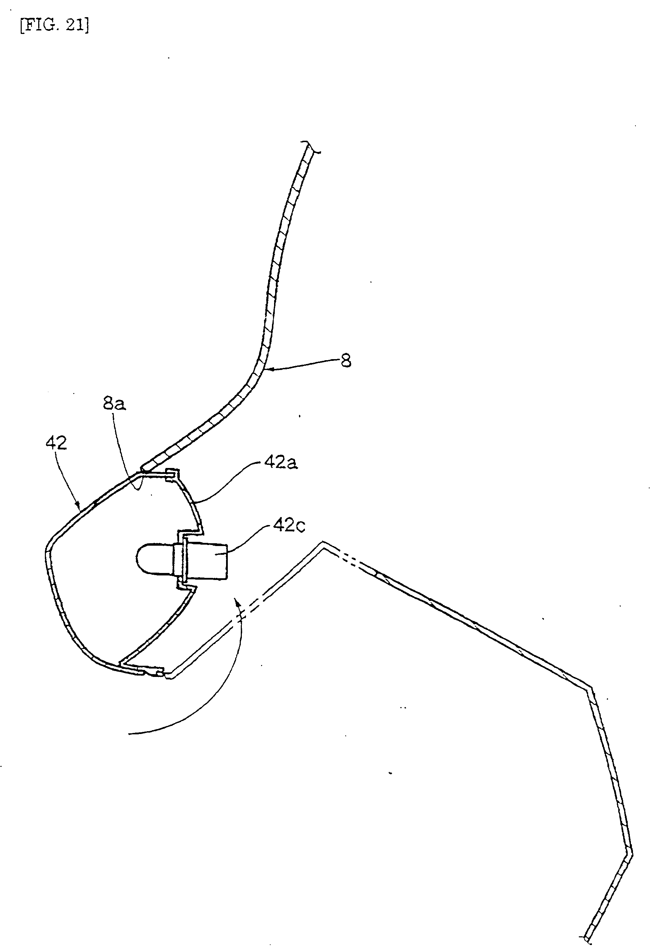

In this way, since the front turn signal lamp 42 is located in the lowest part in the front surface of the front panel 8 as shown with an arrow in FIG. 21, the reverse side of the front turn signal lamp 42 may be easily accessed by hand and the bulb 42c may be easily changed.

As the front turn signal lamp 42 is installed in the cut 8a, the surface rigidity of the area where the front turn signal lamp 42 is attached is secured even if the cut 8a is open downward.

Furthermore, since the underside of the cut 8a is open and the front turn signal lamp 42 is disposed here, a downward illumination area is increased.

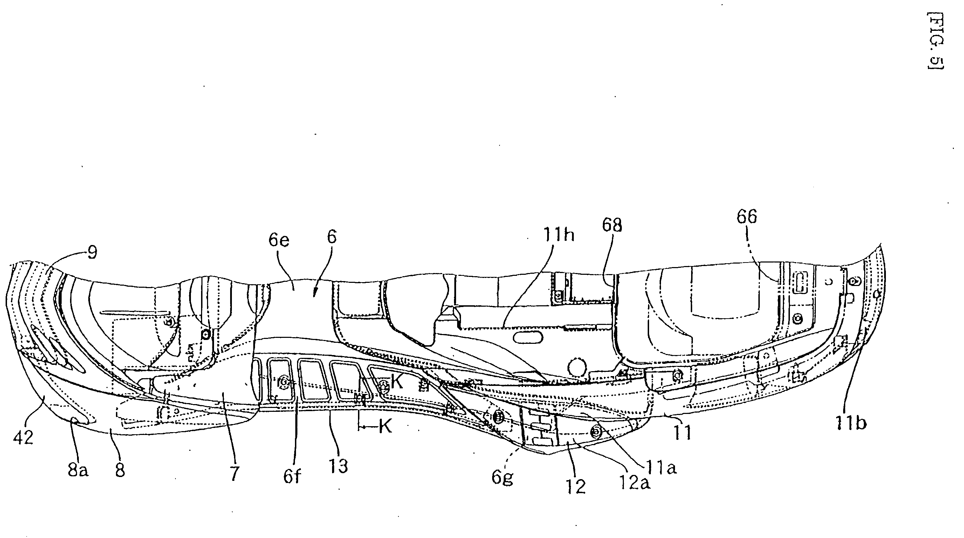

The footrest board 6 as shown in FIGs. 5 and 6 has a tunnel portion 6e formed to swell upward corresponding to the vehicle width center, and also has footrest portions 6f on both sides of the tunnel portion 6e.

The footrest 6f as shown in FIG. 6 is formed to slope up rearward, with its rear end formed with a maintenance opening 6g where the tandem footstep 12 is disposed. Part of the tandem footstep 12 is formed as a recess 12a and attached to the frame 1 at two positions with screws 12b as shown in FIG. 6.

Maintenance (as changing the plug, etc.) of the engine 2 may be done through the maintenance opening 6g after removing the tandem footstep 12. Thus, the tandem footstep 12 serves also as the maintenance lid.

Since a recess 12a is formed in the footstep 12, when the rider's heel is placed in the recess 12a as shown with a phantom line in FIG. 6, the foot is placed in a relaxed state without unnaturally extending the toe.

Furthermore, while the side cover 11 above the recess 12a has a bulging portion 11a bulged laterally, since the recess 12a may be located below the bulging portion 11a so as to circumvent the bulging portion 11a and to lower the position of the bottom surface of the recess 12a, a space for the rider moving on to riding position may be secured.

Furthermore as shown in FIG. 23, a tail lamp 47 is disposed inside the rear part 11b of the side cover 11. Paired upper and lower lamp openings 11c are formed in the rear surface 11b of the side cover 11 so that the tail lamp 47 is visible through the lamp openings 11c. The tail lamp 47 comprises a single lens 47a, and a bulb 47b disposed behind the lens 47a, with the lens 47a extending over the two openings 11c and visible from outside.

In this way, as the paired upper and lower lamp openings 11c are provided and different parts of the single tail lamp 47 are made to be visible through the two openings, appearance is improved because it looks as if two tail lamps 47 were provided.

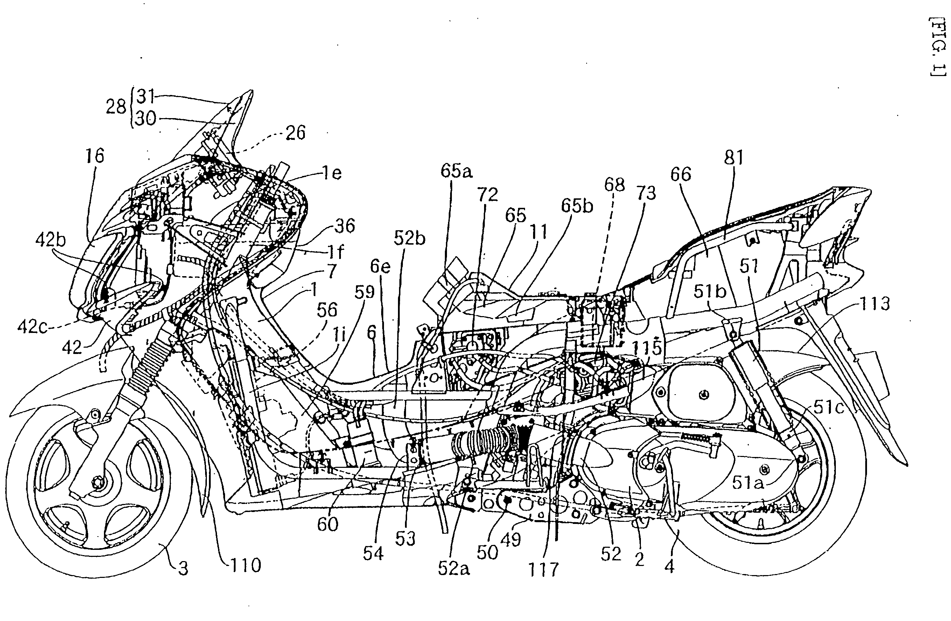

As shown in FIGs. 1 and other drawings, a bracket 49 is attached to the front lower part of the swing unit type engine 2 so that the engine 2 is mounted on the frame 1 through a shaft 50 so as to be movable up and down.

The lower end 51a of a rear cushion 51 is rotatably attached to the rear end of the engine 2 while the upper end 51b of the rear cushion 51 is rotatably supported with a bracket 54 secured to the frame 1.

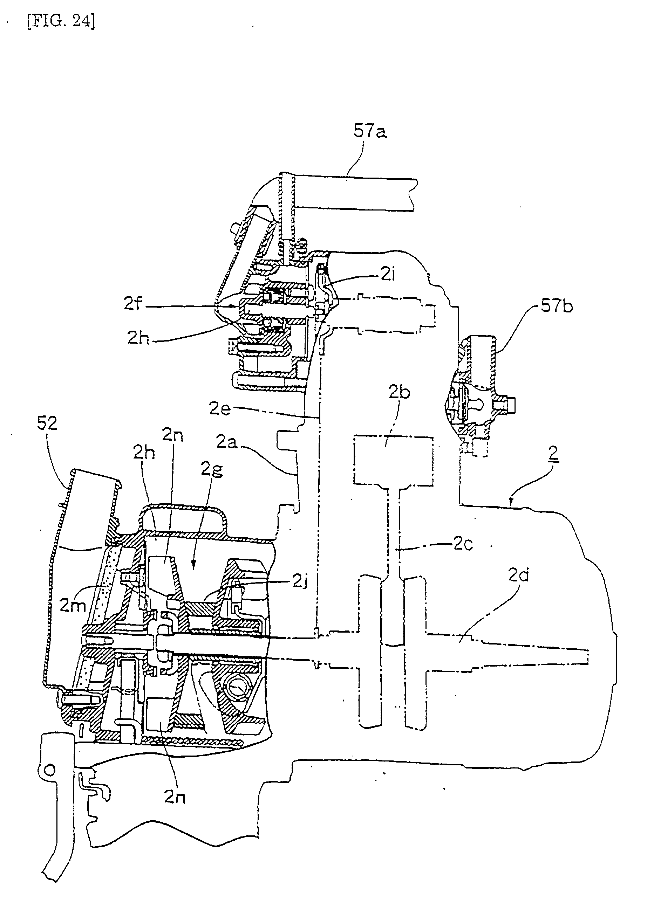

The swing unit type engine 2 as shown in FIG. 24 comprises a cylinder block 2a, a piston 2b disposed in the cylinder block 2a and connected through a connecting rod 2c to a crankshaft 2d. The crankshaft 2d is connected through a chain 2e to a water pump 2f. The end of the crankshaft 2d is provided with a V-belt transmission 2g.

The water pump 2f is arranged to feed cooling water through a hose 57a of a radiator 56, to be described later, to the engine 2 as an impeller 2h is rotated through transmitting means, the chain 2e, so that the water that has circulated through the engine 2 returns to the radiator 56 through a return hose 57b.

The V-belt transmission 2g is provided with an engine side pulley 2i having a V-shaped groove around which is placed a V-belt 2j, and constituted that the position of the V-belt 2j changes as the width of the V-groove changes. The V-belt 2j is routed around a drive side pulley, not shown, to transmit power to the rear wheel 4. The width of the groove of the drive side pulley is also constituted to be changed.

An external air introducing duct 52 is connected through an element 2m to a transmission chamber 2k in which the V-belt transmission 2g is disposed to be cooled.

The external air introducing duct 52 extends forward from the swing unit type engine 2 and consists of a flexible portion 52a made of rubber and a rigid portion 52b made of a plastic material. About the front half of the flexible portion 52a is formed as bellows while its rear end is connected to a belt chamber (engine 2). The front end of the flexible portion 52a is connected to the rear end of the rigid portion 52b. The part near the rear end of the rigid portion 52 b is secured to the frame 1 using a belt 53. The part of the rigid portion 52b forward of the secured position is extended upward and its upper end is inserted into the tunnel portion 6e of the footrest board. The intake opening (intake port) 52c of the external air introducing duct 52 is opened upward at a position corresponding to the top surface of the tunnel portion 6e.

As described above, since the engine 2 is of the swing unit type that moves up and down relative to the frame 1, it is arranged that the relative movement between the swing unit type engine 2 and the frame 1 is absorbed with the flexible portion 52a of the external air introducing duct 52.

Since the intake opening 52c of the external air introducing duct 52 is located at a high position in the tunnel portion 6e and is made open there, mud splashed up with the wheels 3 and 4 and hot air from the engine 2 are less likely to be drawn into the intake opening **(Intake port)** 52c, and clean, cool external air may be supplied to the transmission chamber 2k to secure cooling performance. In the transmission chamber 2k, the supplied external air is sent toward the rear by means of fins 2n formed on the pulley 2i.

Incidentally, while some examples can be seen that use the frame 1 as a duct, since the diameter of the frame is small, the flow rate of the external air per unit time cannot be increased sufficiently and therefore, cooling performance is not always enough. Increasing the diameter will result in increase in the vehicle weight.

In contrast, providing an external air introducing duct 52 separate from the frame 1 permits to increase the diameter and secure the cooling performance without increasing weight to a large extent.

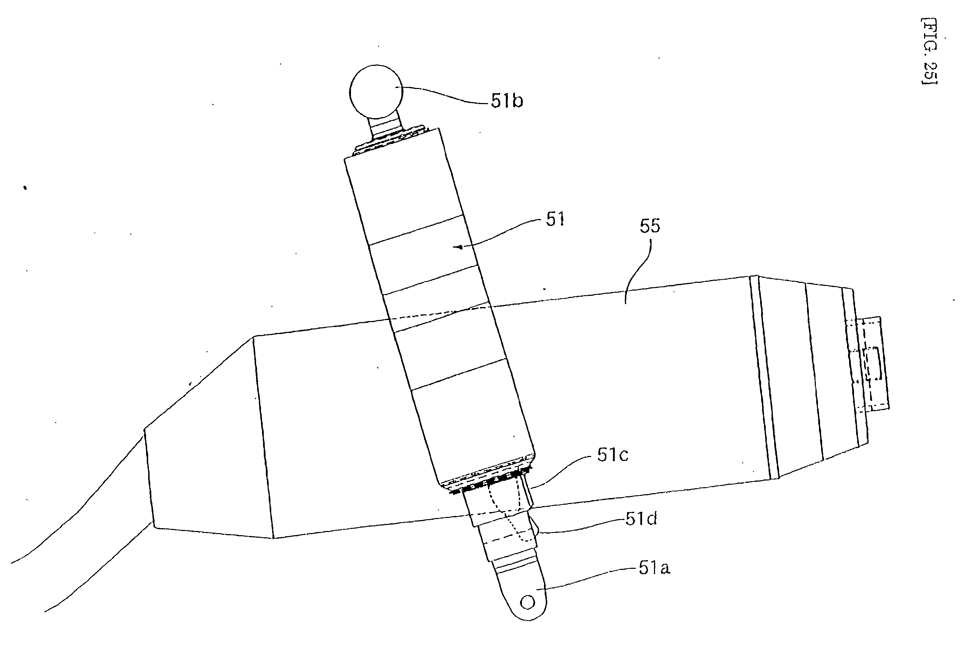

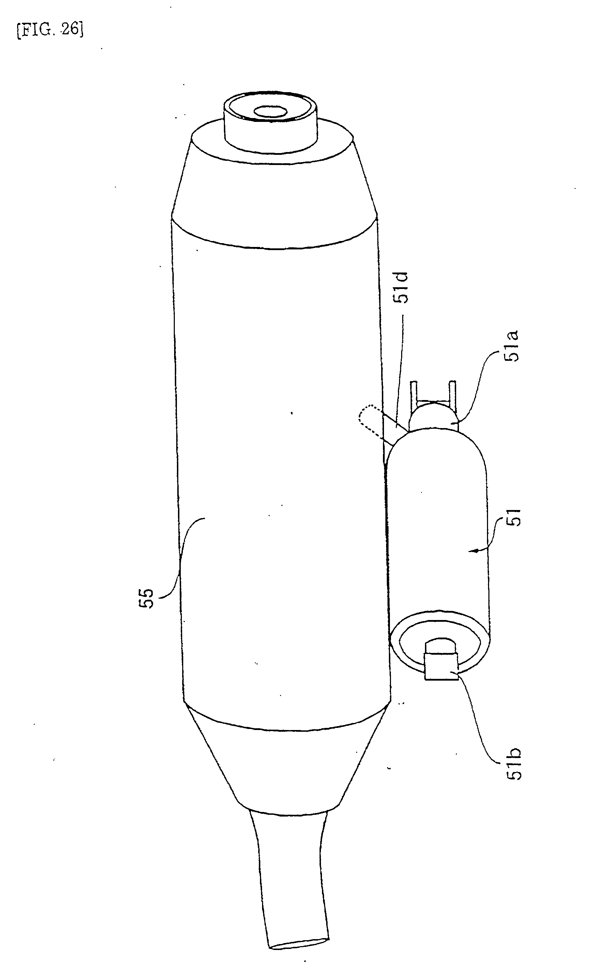

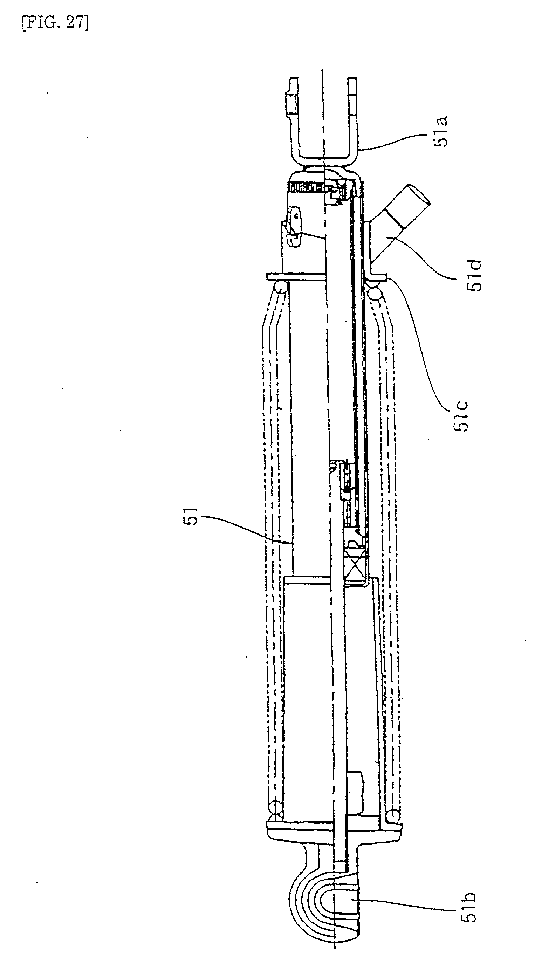

As shown in FIGs. 25, 26, and 27, each of the rear cushions 51 on both sides is provided with an adjustment member 51 c for making initial adjustment. The adjustment member 51 c of one of the rear cushions 51 located between a muffler 55 and the rear wheel 4 is provided with an operation pipe 51 welded and projecting obliquely downward. The initial adjustment is made by turning the adjustment member 51c by operating the operation pipe 51d by means of a tool (not shown) provided on the vehicle.

Providing the operation pipe 51 d by welding to project below the muffler 55 makes it possible to easily make the initial adjustment without being obstructed with the muffler 55, even in the case the rear cushion 51 is located between the muffler 55 and the rear wheel 4.

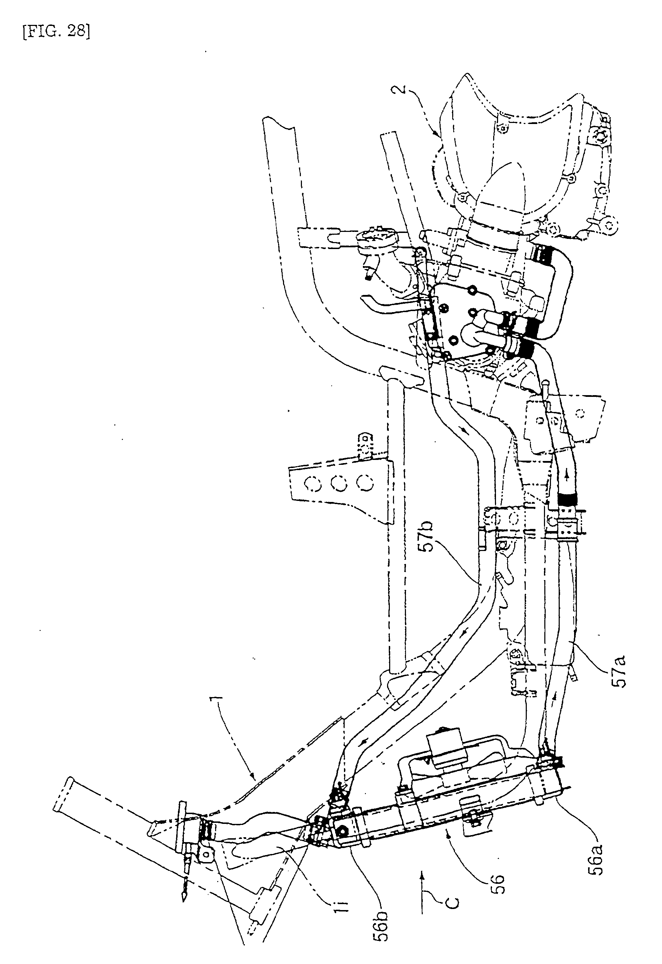

As shown in FIG. 28, the radiator 56 is connected through the supply hose 57a and the return hose 57b to the engine 2 disposed horizontally and laterally as described above.

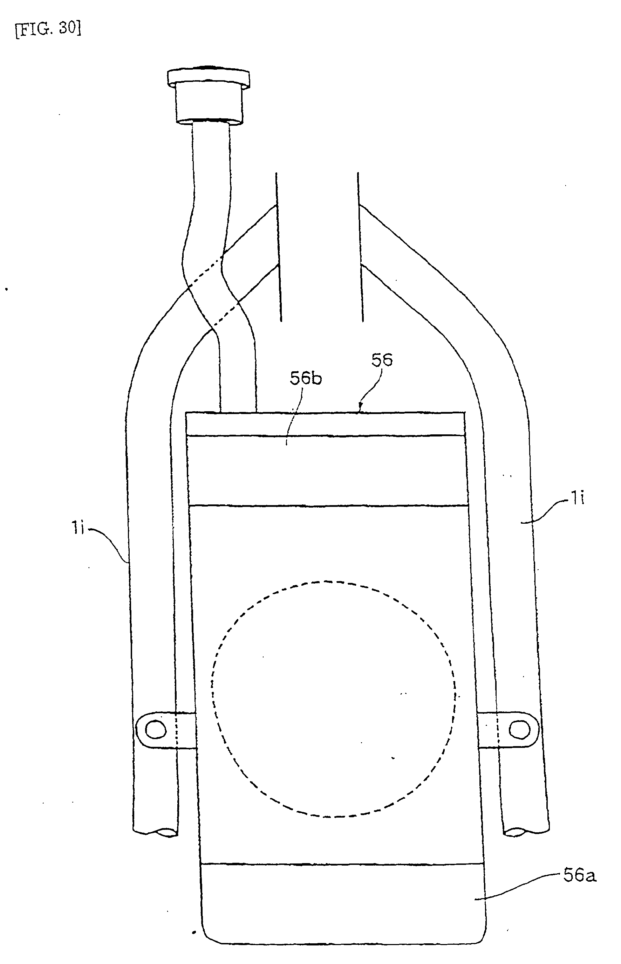

The radiator 56 is disposed within the tunnel portion 7e of the leg shield 7 and between the right and left pipes 1i extending obliquely downward from the head pipe 1f of the frame 1 (as shown in FIGs. 30, etc.).

The radiator 56 comprises upper and lower tank portions 56a and 56b interconnected through a fin portion 56c. The wind produced as the vehicle runs flows through the fin portion 56c and cools water flowing through the fin portion 56c by exchanging heat. The supply hose 57a is connected to the right side, as seen from the rear of the vehicle, of the lower tank portion 56a and extended up to the engine 2. The return hose 57b connected to the engine 2 is extended forward and connected to the right side of the upper tank portion 56b, as seen from the rear of the vehicle. The return hose 57b is routed through inside the tunnel portions 7e and 6e.

Disposing the upper and lower tank portions 56a and 56b as described above makes it possible to reduce the width of the radiator 56 in the right-left direction and accordingly the vehicle width, while securing the footrest spaces.

Routing the return hose 57b in the tunnel potions 7e and 6e makes it possible to eliminate the worry about routing of the return hose 57b and to protect the hose 57b with the tunnel potions 7e and 6e.

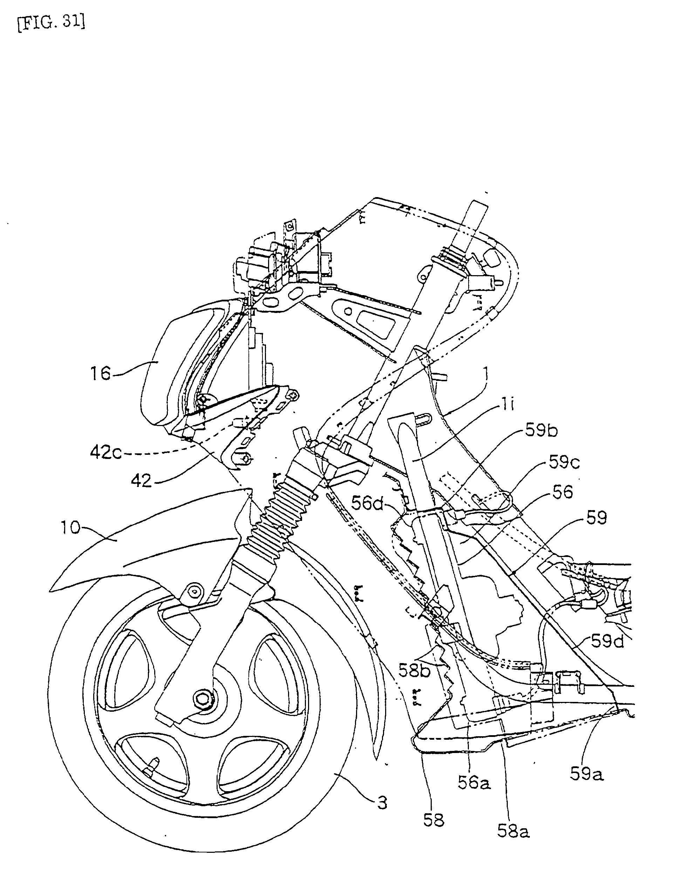

The radiator 56 as shown in FIG. 31 is disposed with a slight forward tilt on a lower cover 58 covering the lower part of the vehicle body, with a radiator guard 59 disposed behind the radiator 56.

The front end portion of the lower cover 58 is bent upward and has a louver portion 58b through which wind produced as the vehicle runs is introduced to the radiator 56.

A cooling wind discharge outlet 58a is formed in part of the lower cover 58 behind the radiator 56. The rear end portion 58c of the lower cover 58 as shown in FIG. 6 extends rearward to the vicinity of the tandem footstep 12.

The lower cover 58 as a single body corresponds to conventional inner and under covers put together.

The radiator guard 59 is of a U shape in horizontal cross section comprising a pair of side walls 59c located on both sides of the radiator 56 and extending in the front-rear direction of the vehicle, and a rear wall 59d interconnecting the side walls 59c.

The lower end 59a of the radiator guard 59 is inserted into the cooling air discharge port 58a. The upper end 59b of the radiator guard 59 is arranged to cover the radiator 56 from above.

The cooling air is heated by exchanging heat with the radiator 56 as it passes through the louver portion 58b. The heated air is guided to the radiator guard 59, and discharged downward from the cooling air discharge port 58a of the lower cover 58.

The radiator guard 59 is provided with a canister 60 as shown in FIGs. 1, etc.

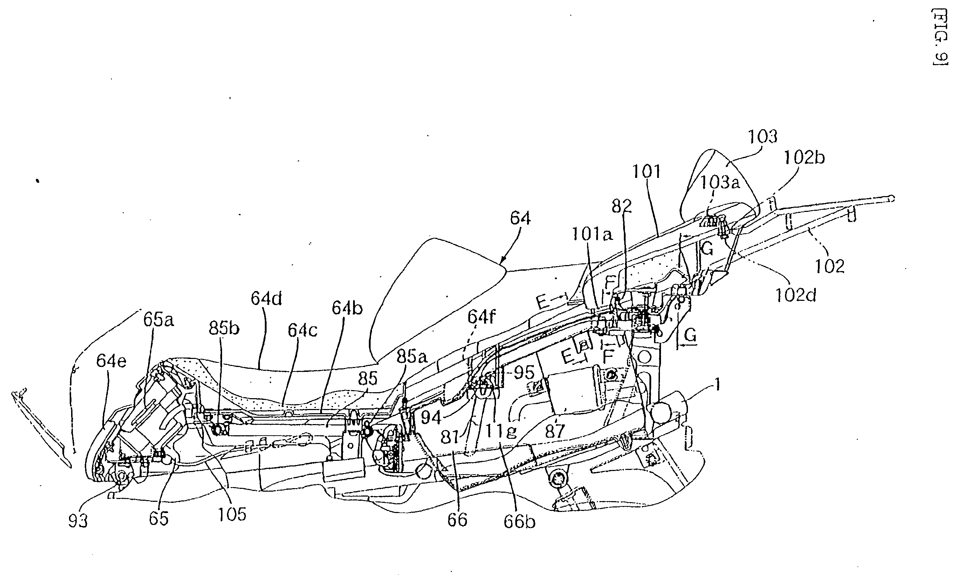

In FIG. 9 are shown a two-rider seat 64, a fuel tank 65 disposed at the front lower part of the seat 64, and an storage compartment 66 is disposed behind the fuel tank 65.

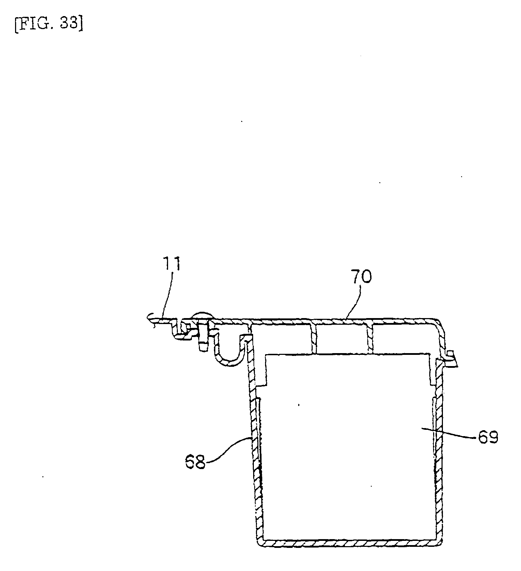

As shown in FIGs. 5, 6, 32, and 33, a battery compartment 68 is disposed between the fuel tank 65 and the objects compartment 66. The battery compartment 68 is formed integrally with the side cover 11, which serves as an external cover, to hold in it a battery 69, and is closed and opened with a lid 70.

Forming the battery compartment 68 integrally with the side cover 11 as described above reduces the number of components and enables efficient use of the space.

In particular, when the battery compartment 68 is made in a large size, it is difficult to dispose the compartment 68 under the footrest board 6 in terms of the space. When the compartment 68 is disposed in the front section of the vehicle, a long harness must be routed to the engine 2.

Therefore, the most preferable position that is close to the engine 2 and capable of securing the space, is the position between the fuel tank 65 and the objects compartment 66.

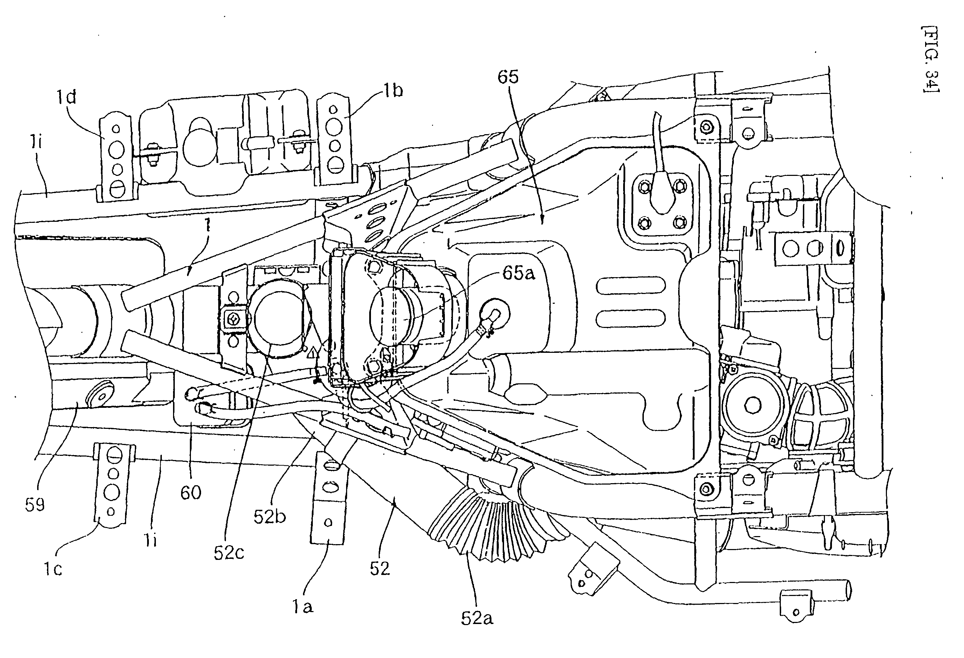

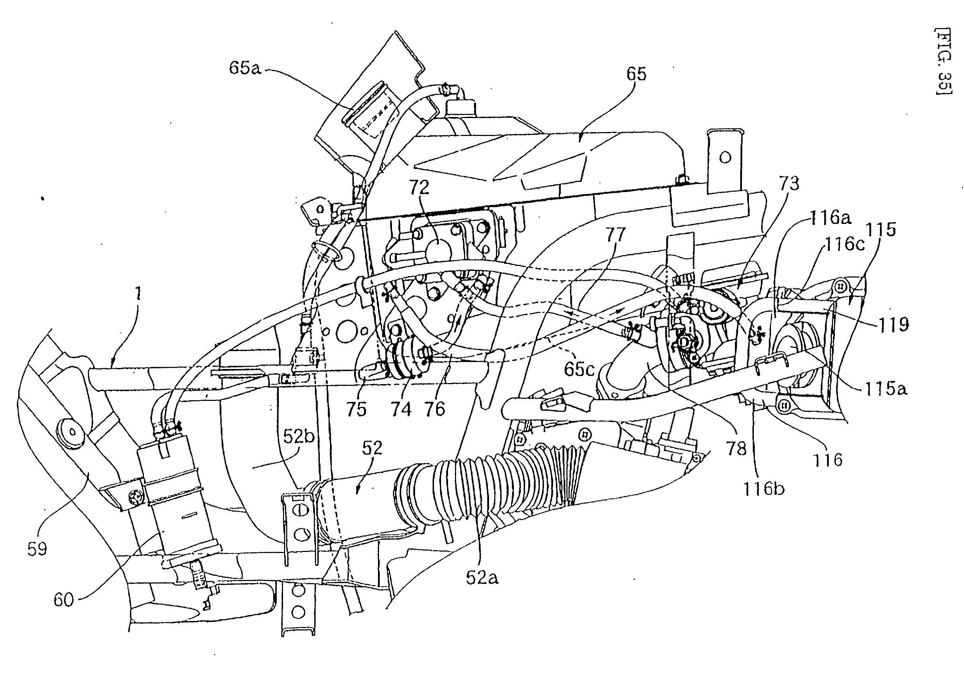

The fuel tank 65 is, as shown in FIGs. 34 and 35, supported with the frame 1, with a filler inlet 65a disposed in its upper front end section. A fuel pump 72 is attached to the side surface of the fuel tank 65 to supply fuel from the fuel tank 65 to a carburetor 73.

To put it more in detail, a hose 75 extending from a strainer 74 is connected to the bottom area 65c of the fuel tank 65. The hose 75 extending from the strainer 74 is connected to the fuel pump 72. The fuel pump 72 is connected through a hose 76 to the carburetor 73 and also connected through a vacuum hose 77 to an intake manifold 78.

With the above arrangement, suction through the intake manifold 78 is utilized to draw fuel from the fuel tank 65 through the strainer 74 into the fuel pump 72. Then, the fuel pump 72 delivers fuel through the hose 76 to the carburetor 73.

With the above arrangement, since the fuel tank 65 and the carburetor 73 are located at about the same height, it is difficult to utilize a height difference for supplying fuel from the fuel tank 65 to the carburetor 73. That is why the fuel pump 72 is used to forcibly feed fuel from the fuel tank 65 to the carburetor 73.

With a constitution as in this embodiment using the fuel pump 72, its performance may be stabilized by disposing the fuel pump 72 at a position higher than that of the carburetor 73 and by making the suction hose 77 short.

Since the fuel pump 72 is attached to the side surface area 65b of the fuel tank 65, the fuel pump 72 may be attached or removed together as a subassembly with the fuel tank 65 when the fuel tank 65 is attached or removed.

The storage compartment 66 is of a size that permits to hold a crash helmet or the like, and is supported with the frame 1. Its upper opening 66a may be opened and closed with the seat 64.

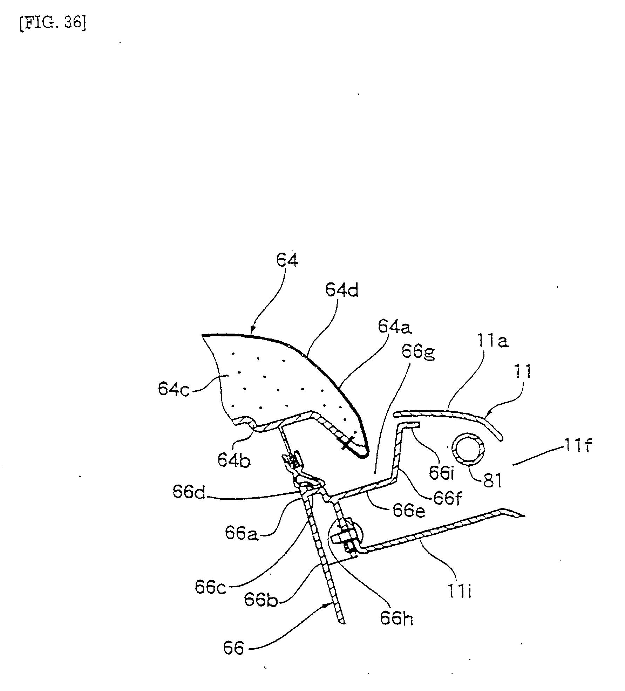

As shown in FIGs. 1 and 9, a standing handle 81 projecting upward is secured to part of the frame 1 by the side of the storage compartment 66. In this area, the objects compartment 66, the seat 64, and the side cover 11 are arranged as shown in FIG. 36 in cross section.

That is, the upper part of the objects compartment 66 is formed to be a sealing surface portion 66c. The inner side of the sealing surface portion 66c is formed with a fence portion 66d projecting upward from the general surface of the sealing surface portion 66c. As a seal member 82 attached on the side of the seat 64 side comes in contact with the sealing surface portion 66c, the storage compartment 66 is closed and sealed.

A horizontal surface portion 66e is formed at a position one step below the sealing surface portion 66c of the storage compartment 66. The end portion, outward of the vehicle, of the horizontal surface portion 66e is formed to be a slope wing 66f. "Wall portions" of the horizontal surface portion 66e and the slope wing 66f form a recess 66g into which the side edge portion 64a of the seat 64 is inserted.

An attachment lug 11i extending from the side cover 11 is secured to a securing portion 66h formed on the side wall 66b of the storage compartment 66. A covering portion 11d is formed on part of the side cover 11 corresponding to the standing handle 81 so as to bulge upward and cover the handle 81. The upper end portion 11e of the covering portion 11d is disposed to be overlapped and continuous with the upper end flange portion 66i of the slope wing 66f of the storage compartment 66.

The rider may inset his or her hand through the opening 11f formed in the side cover 11, grip the standing handle 81, and bring the vehicle in upright position. The side cover 11 is split into two, right and left parts on both sides of the vehicle center.

In this way, by arranging that the side edge portion 64a of the seat is inserted into the recess 66g and that the upper end portion 11e of the side cover 11 is superimposed on the upper end flange portion 66i of the slope wing 66f, continuity between the side edge portion 64a of the seat and the side cover 11 is secured and appearance quality is improved.

Furthermore, by forming the fence portion 66d projecting upward within the sealing surface portion 66c, water is more reliably prevented from finding its way into the storage compartment 66 in comparison with the case in which the sealing is made by simply bringing the seal member 82 into contact with a flat sealing surface portion 66c.

Since the recess 66g is sloped down forward, water falling from the seat 64, etc. flows toward the front of the vehicle and discharged, so that water is prevented from entering the storage compartment 66.

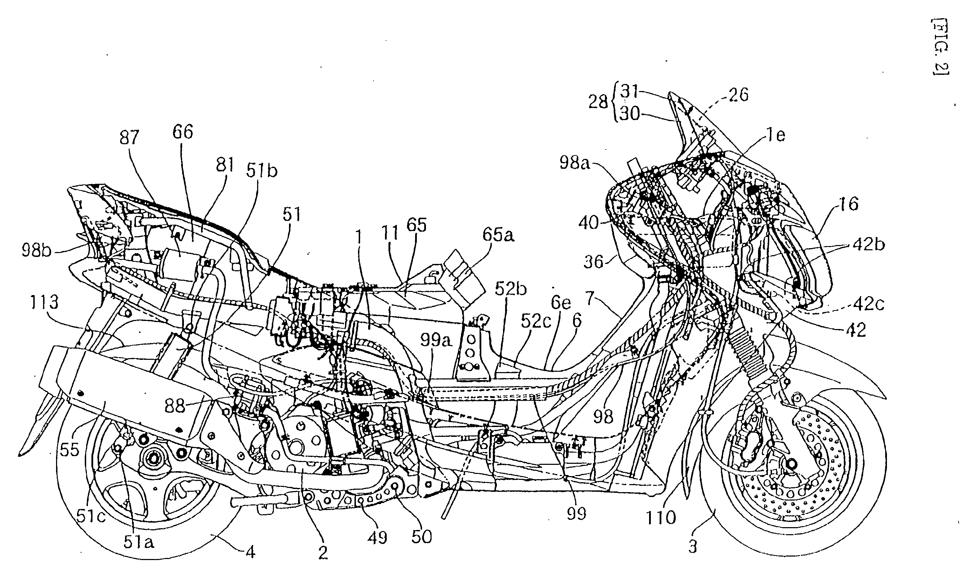

As shown in FIG. 2, an AIS (air intake system) cleaner 87 is attached to the side wall 66b of the storage compartment 66. An AIS 88 to which the AIS cleaner 87 is disposed is attached to a rear arm 90 suspending the rear wheel 4.

The AIS 88 serves to introduce secondary air from outside into exhaust gas. It utilizes the suction of the engine 2 to draw air from outside. The drawn air is supplied to the vicinity of the outlet of the exhaust manifold to accelerate oxidation and activate the catalyst.

The AIS cleaner 87 is disposed in the middle of air intake path and prevents dust, water, etc. from being drawn in. A pipe 87a is connected to the AIS cleaner 87. The fore-end of the pipe 87a is inserted into the frame 1. Air drawn from the interior of the frame 1 is cleaned with the AIS cleaner 87 and supplied through the pipe 87a to the exhaust manifold 89.

One end of the AIS cleaner 87 is attached to a bracket 91 secured to the frame 1 while the other end is attached to the side surface area of the objects compartment 66.

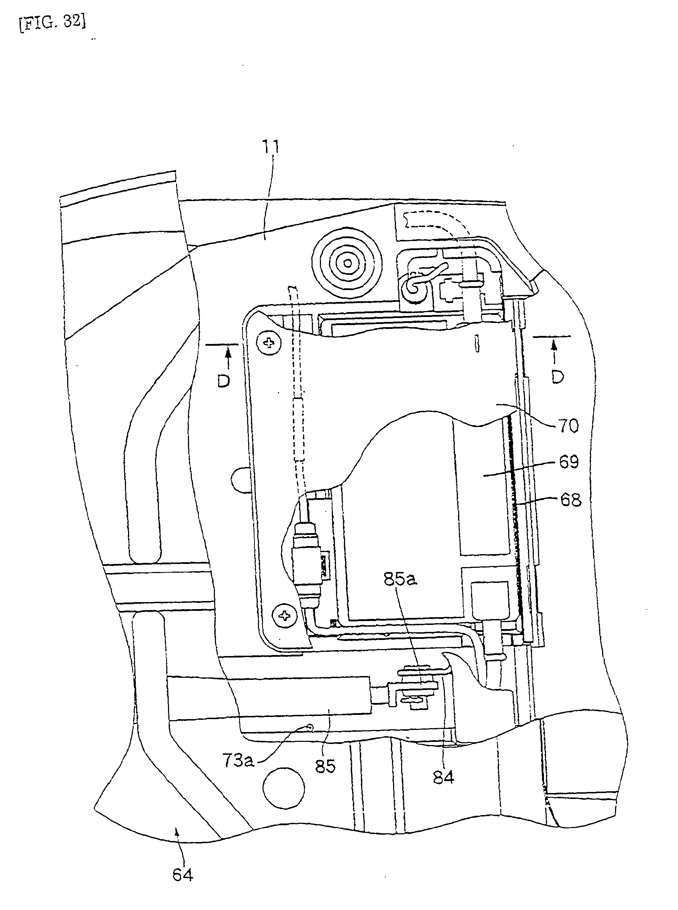

As shown in FIG. 9, a metallic plate 84 is attached to the side wall 66b of the storage compartment 66. The rear end 85a of a seat damper 85 is attached to the metallic plate 84 using bolts and nuts. The front end 85b of the seat damper 85 is attached to the seat 64. The seat damper 85 is disposed by the side of the battery compartment 68. As shown in FIG. 32, part of the side cover 11 that covers the fuel tank 65 is provided with an opening 11h for the damper. When the seat 64 is opened up, the opening 11h serves as room for permitting the seat damper 85 to rotate upward.

In the state of the seat 64 opened up as shown in FIGs. 32 and other drawings, since a pilot screw 7a of the carburetor 73 is accessible through the opening 11h for the damper, the pilot screw 73a may be easily adjusted.

As shown in FIG. 9, the seat 64 is made by laminating a seat core member 64b, a cushion 64c, and a covering material 64d. The front end 64e of the seat 64 is attached on the frame 1 side to be rotatable through a hinge 93.

The seat core member 64b is provided with a seat side load bearing portion 64f of an H-shaped horizontal cross section and projecting downward from about the center, with respect to the vehicle's front-rear direction, of the core member. The standing handle 81 is provided at its middle position with a support seat 94 directed inward. The recess bottom surface portion 11g of the side cover 11 is secured to the support seat 94 using a screw 95. The load bearing portion 64f on the seat side is in contact with the bottom surface portion 11g.

As shown in FIGs. 2 and 9, a seat lock device 97 is provided on the side of the frame 1 at a position corresponding to the rear end of the seat 64. The seat lock device 97 is connected through a seat lock cable 98 to the main switch 40.

When the main switch 40 is operated to the unlocking position with a key, the seat lock cable 98 is pulled and the seat lock device 97 is unlocked by remote control.

The front end 98a of the seat lock cable 98 directed rearward is inserted into the tunnel portions 6e and 7e, then into a protector 99 of a U-shaped cross section, further from the rear end 99a of the protector 99 into the frame 1, taken out from the rear end of the frame 1, and connected to the seat lock device 97.

Inserting the seat lock cable 98 into the U-cross-sectional protector 99 and the pipe-shaped frame 1 for protection provides anti-theft measures by preventing the seat lock cable 98 from being pulled by unauthorized unlocking input from outside.

As shown in FIGs. 9, 37, and 38, a tandem handle 101 is provided behind the seat 64. A carrier 102 and a backrest 103 are attached to the tandem handle 101, etc.

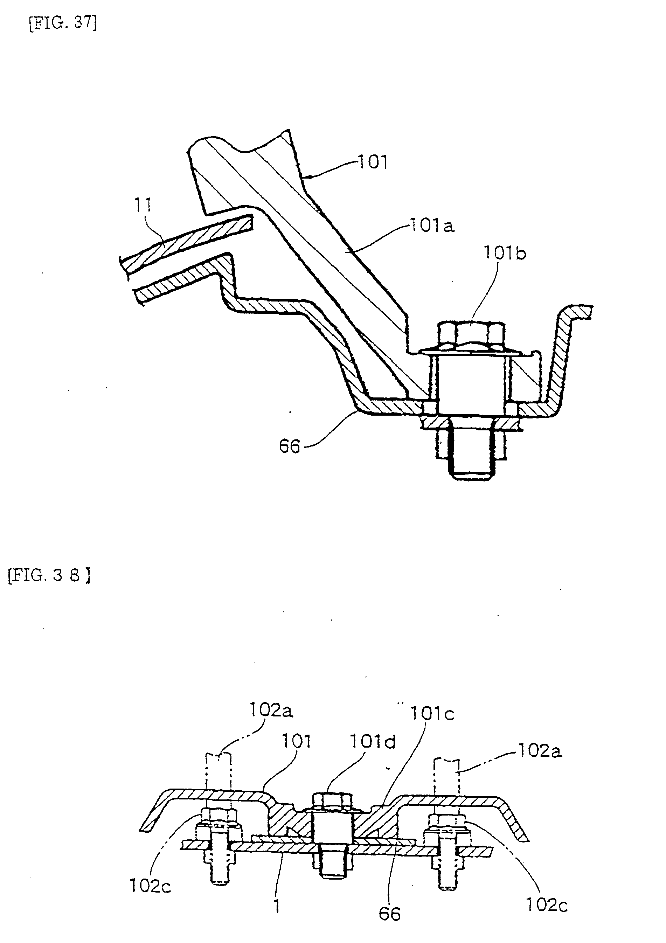

As shown in FIG. 37, the tandem handle 101 is attached to the frame 1 at its front leg portion 101a using a bolt 101b and its rear attachment portion 101c using a bolt 101d.

As shown in FIG. 38, the frame attachment portion 102a on the lower front end of the carrier 102 is attached to the frame 1 using a bolt 102c, and the bolt 102c is covered with the rear attachment portion 101c of the tandem handle 101. The handle attachment portion 102b on the upper front end of the carrier 102 is attached to the tandem handle 101 using a bolt 102d as shown in FIG. 9.

The backrest 103 is attached to the rear part of the tandem handle 101 as shown in FIG. 9 using a bolt 103a.

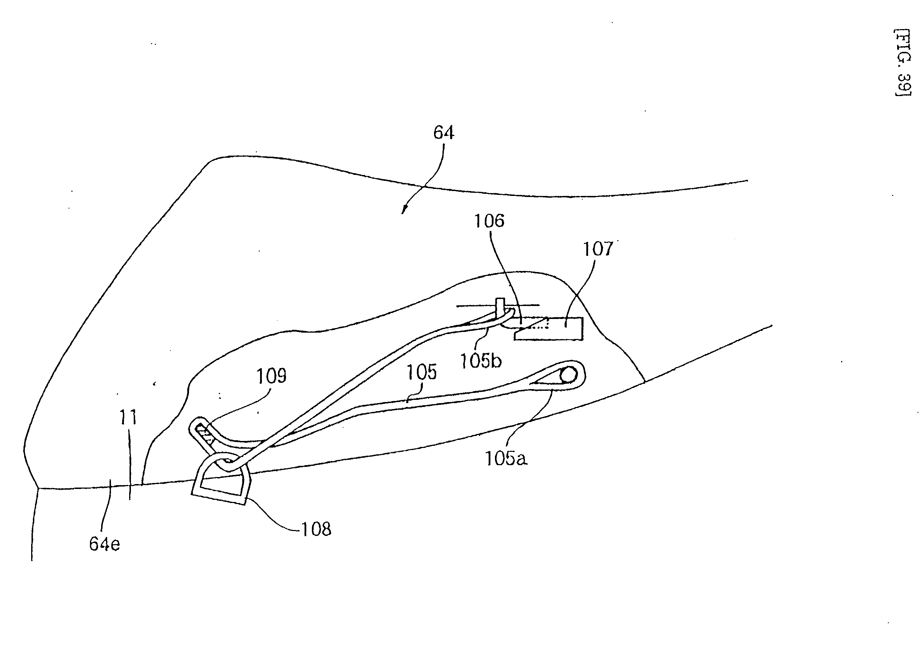

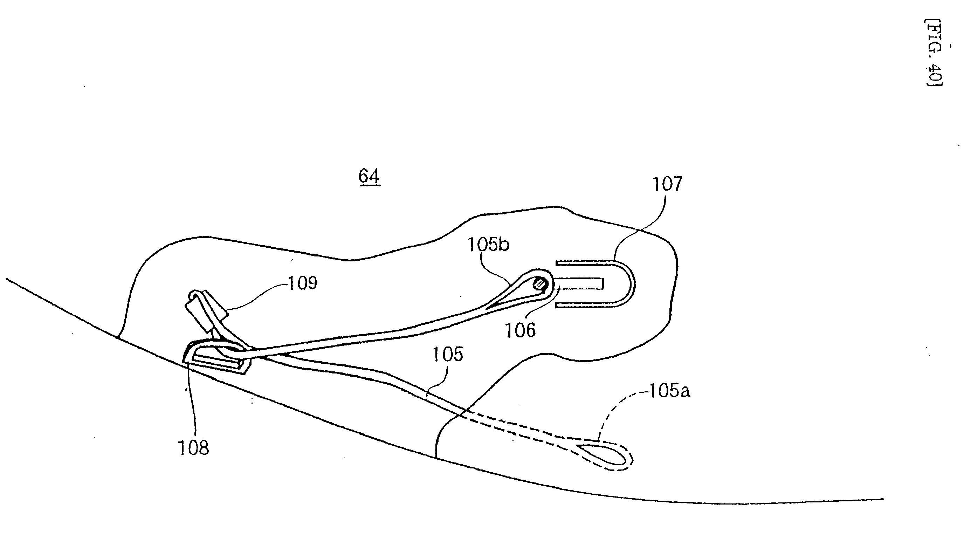

As shown in FIGs. 39 and 40, a helmet hanger 105 for hanging a crash helmet is disposed on the reverse aide of the front end part of the seat 64.

The helmet hanger 105 is made of a wire, with its one end 105a attached to the reverse side of the seat 64, and the other end provided with a ring portion 105b. The ring portion 105b may be hooked on or unhooked from a hook rod 106 provided on the reverse side of the seat 64. A turn back member 109 is provided on the reverse side of the seat 64. The middle part of the helmet hanger 105 is hooked on the turn back member 109 and turned back.

A projecting part 107 projecting upward is provided on the side of the fuel tank 65 at a position corresponding to the hook rod 106.

To use the helmet hanger 105, the hanger 105 is passed through the ring 108 of the helmet in the state of the seat 64 opened up, and the ring portion 105b of the hanger 105 is hooked on the hook rod 106 on the reverse side of the seat 64. As the seat 64 is closed down, the hook rod 106 is inserted into the projecting part 107 on the fuel tank 65 side to prevent the ring portion 105b from coming off the hook rod 106.

The front fender 110 covering the front wheel 3 is formed as shown in FIG. 20 that the front part 110a of it before the under bracket 111 is formed to swell up, while the rear part 110b of it behind the underside of the under bracket 111 is sunk by one step.

In this way, even if the front fender 110 moves up and down together with the front wheel 3, a gap H is secured between the rear part 110b of the front fender 110 and the under bracket 111. As a result, the front fender 110 does not interfere with the under bracket 111. Also, external appearance quality is improved because the gap between the front fender 110 and the under bracket 111 is invisible from the front because the gap is hidden behind the front part 110a of the front fender that is raised by one step.

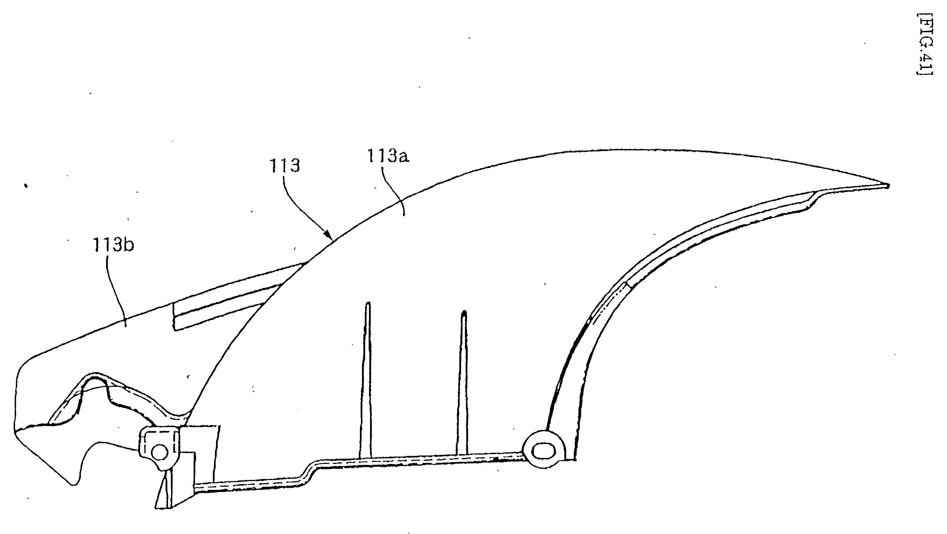

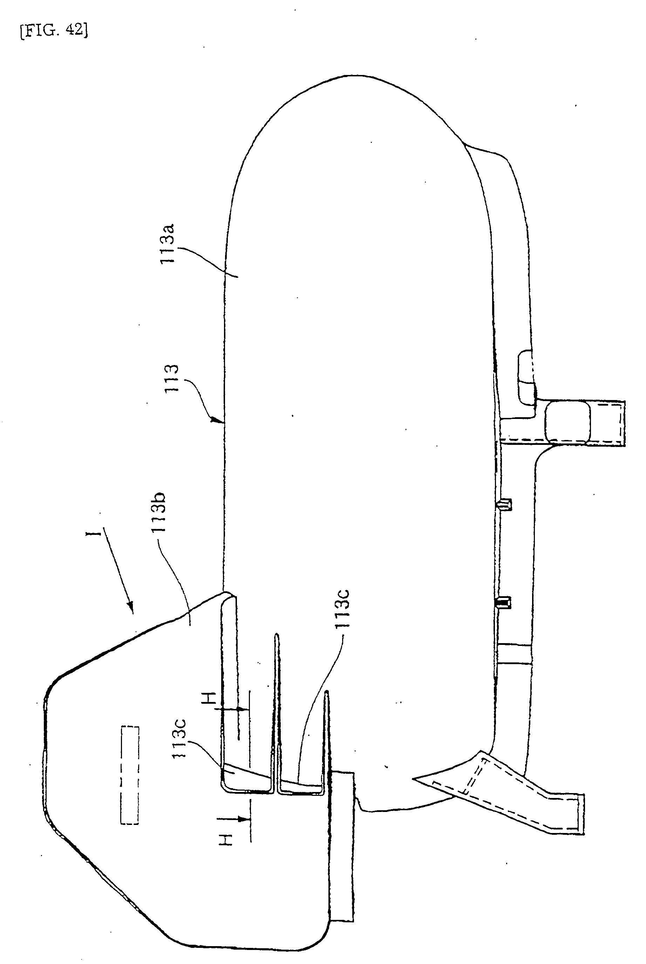

As shown in FIGs. 1 to 3, and 41 to 44, the rear fender 113 provided on the side of the rear wheel 4 comprises a rear fender main body portion 113a covering the rear wheel 4, and a covering portion 113b extending from the right corner of the front end of the main body portion 113a. The covering portion 113b is arranged to cover the AIS cleaner 87.

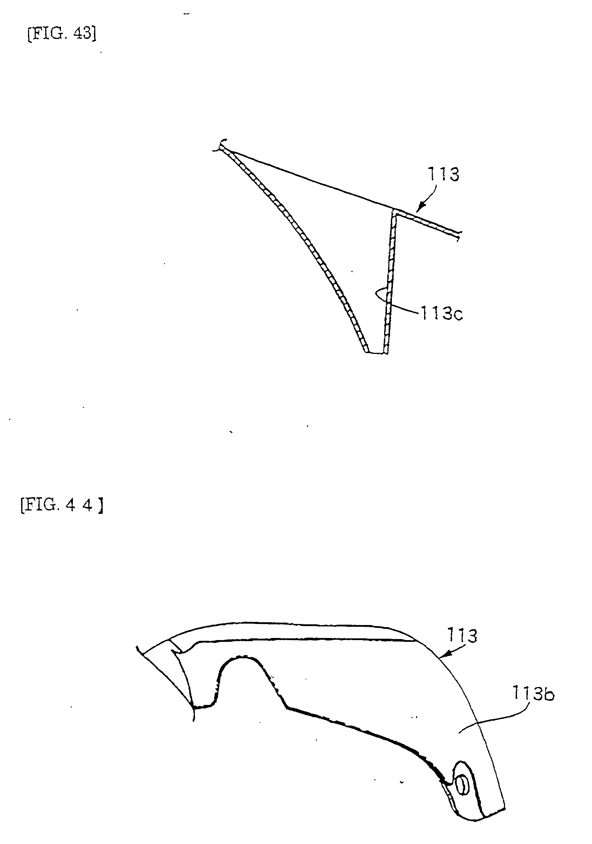

Two water drain holes 113c are provided in the boundary area between the covering portion 113b and the main body portion 113a as shown in FIG. 43.

Providing the water drain holes 113c as described above makes it possible to discharge water on the rear fender 113 through the holes and to protect the air cleaner 115 from water

That is to say, part of the water stirred up with the rear wheel 4 onto the rear fender main body portion 113a on the left side of the vehicle center line is blocked with the air cleaner 115 itself and prevented from entering the suction port 115a located on the front side of the air cleaner 115. Also, part of the water stirred up with the rear wheel 4 onto the rear fender main body portion 113a on the right side of the vehicle center line is discharged through the water drain holes 113c, does not flow forward, and is prevented from entering the suction port 115a located on the front side of the air cleaner 115.

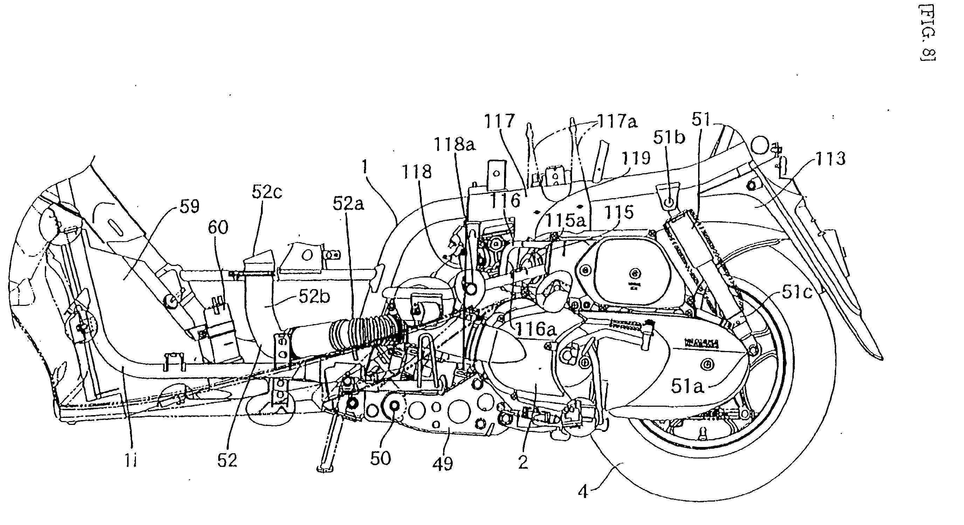

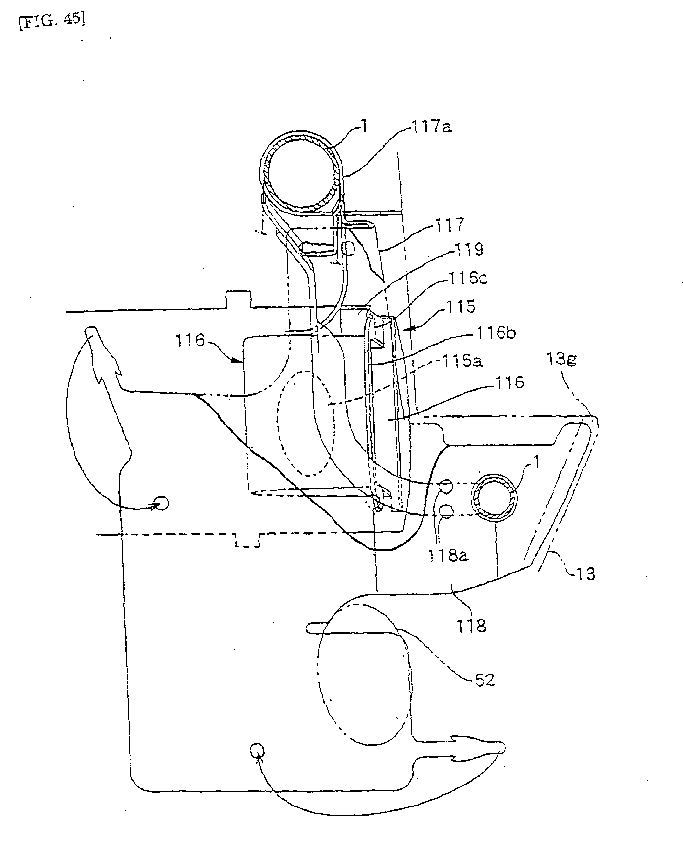

As shown in FIGs. 8 and 45, the suction port 115a of the air cleaner 115 is directed obliquely outward. Around the suction port 115a is disposed a compartment 116. The opening 116a of the compartment 116 is directed sideways and has a flange 116b for preventing water from entering the interior of the opening 116a. The upper part of the flange 116b is provided with a cut 116c where a sponge member 119 is disposed.

Above the suction port 115a, a first water prevention flap 117 is attached to the frame 1 through a belt 117a and hangs down. In front of the suction port 115a, a second water prevention flap 118 is disposed along the vehicle width direction as attached by means of a belt 118b passed through a hole 118a. Both of the water prevention flaps 117 and 118 are made of rubber formed as a single member.

The first water prevention flap 117 prevents water coming from above from entering the suction port 115a. The second water prevention flap 118 prevents water coming from the front of the vehicle from entering the suction port 115a.

The water flowing over the compartment 116 is absorbed with the sponge member 119 and prevented from entering the suction port 115a of the air cleaner 115 through the opening 116a. Providing the sponge member 119 here prevents water from being splashed up even if water strikes here. Therefore, entry of water is more effectively prevented in comparison with the case in which only the flange 116b is provided. Furthermore, since the side molding 13 is provided with a rib 13g near the reverse side of the second water prevention flap 118, water on the front side of the second water prevention flap 118 is prevented from finding its way around to the back side.

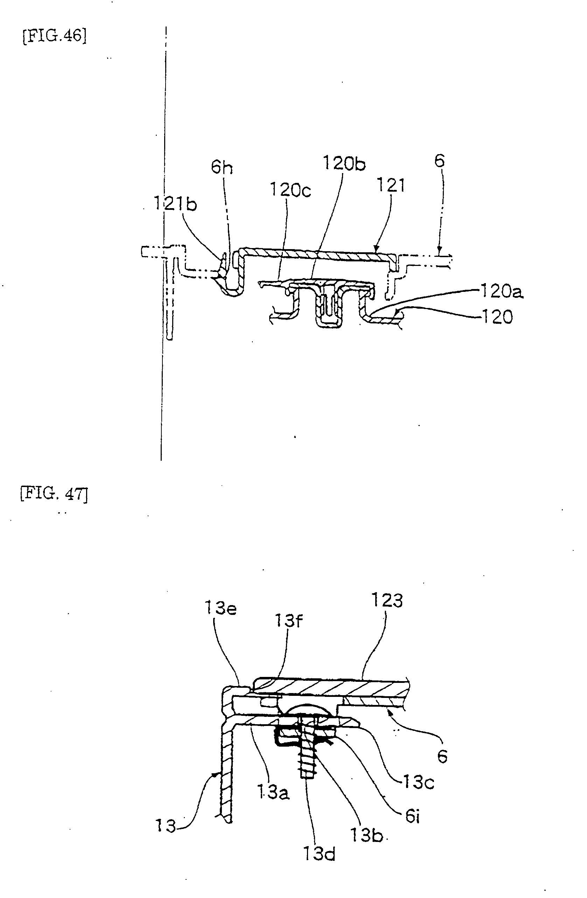

A recovery tank 120 shown in FIG. 46 is disposed under the footrest board 6, comprising a tank body 120a and a cap 120b for opening and closing the tank body 120a. The cap 120b faces up toward a pear-shaped tank opening 6h which is formed on the footrest board 6 and may be opened and closed with a cover 121.

The cover 121 is provided with a pair of hooks 121a projecting therefrom, and with an elastically deformable engagement lug 121b on the side opposite the hooks 121a. Those hooks 121a are arranged such that they are stopped by engagement with the reverse side of the periphery of the tank opening 6h while the engagement lug 121b may engage with and disengage from the periphery.

The cap 120b is provided with a tongue portion 120c to be picked up by fingers to remove the cap 120b for replenishing water.

To replenish the recovery tank 120 with cooling water, a mat 123 is removed, the cover 121 is then removed by disengaging the lug 121b of the cover 121, and the cap 120b is removed by holding the tongue 120c by fingers. When the cap 120b is to be removed in this way, fingers may be inserted to the head portion of the pear shape of the tank opening 6h, and the head portion may be therefore used for the space for admitting fingers.

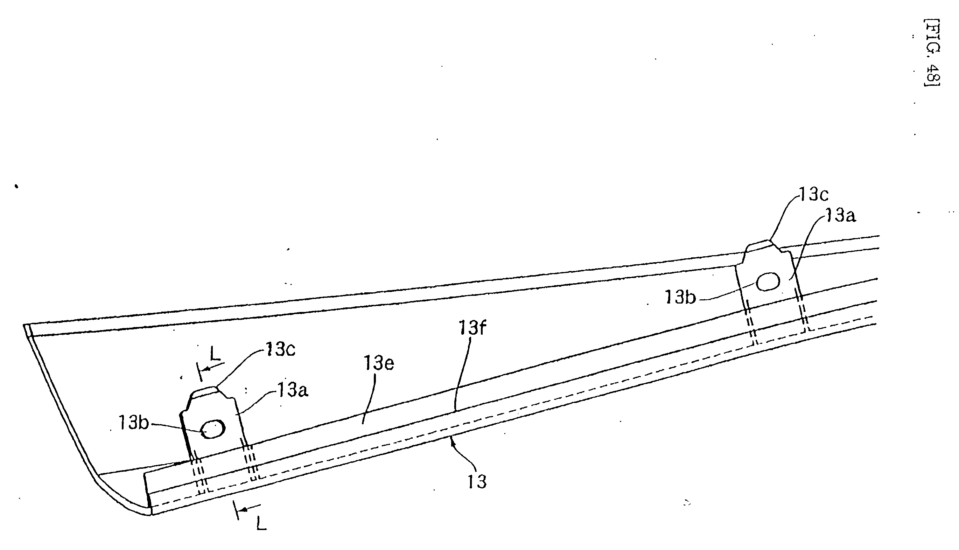

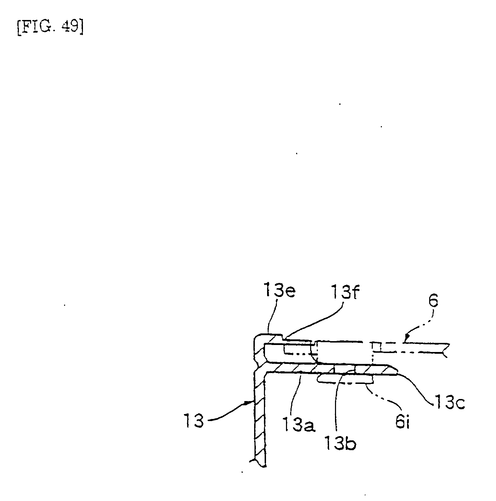

The area where the side molding 13 and the footrest board 6 join together is constituted as shown in FIGs. 5, 47, 48 and 49. That is, the upper part of the side molding 13 is formed to be an attachment lug 13a which extends generally in horizontal direction and provided with a bolt hole 13b. The further distal end of the attachment lug 13a is formed to be a projection 13c. A securing section 6i of a U shape in cross section of the footrest board 6 is secured with a screw 13d to the attachment lug 13a.

The upper end portion of the side molding 13 is formed to be a placement lug 13e on which the periphery of the mat 123 is placed. The placement lug 13e is formed with a step 13f to which the periphery of the mat 123 is fitted. Thus, the mat 123 is placed in position and its periphery is prevented from turning up.

Furthermore, since the attachment lug 13a of the side molding 13 is provided with a projection 13c formed to extend further forward, when the side molding 13 is to be temporarily attached, the projection 13c contacts the reverse surface of the footrest board 6 and therefore prevents the side molding 13 from falling toward outside in the state of the attachment lug 13a being inserted into the interior of the U-cross-sectional securing portion 6i of the footrest board 6.

As described so far, with the teaching described in the claim, since the intake port of the external air introducing duct is made open within the tunnel portion on the front side, mud splashed up with wheels and heat from the engine are less drawn in through the intake port of the duct. Instead, clean, cool external air is supplied for securing cooling property.

Furthermore, although the engine of a unit swing type swings up and down relative to the vehicle frame, since the flexible part of the external air introducing duct absorbs relative movement between the engine and the vehicle frame, adverse effects are practically precluded effectively.

### Description of the Symbols

1: Vehicle frame 2: Unit swing type of engine 6: Footrest board 6a: Tunnel portion 52: External air introducing duct 52a: Flexible portion 52b: Rigid portion 52c: Intake port

## Claims

1. A scooter type vehicle having a unit swing type engine (2) and an engine cooling structure, wherein the unit swing type engine (2) is coupled for up-and-down movement to a vehicle body frame (1), and an external air introducing duct (52) is connected to the unit swing type engine (2) for cooling the engine (2) by drawing external air through the intake port (52c) of the external air introducing duct (52), the external air introducing duct (52) is extended forward from the unit swing type engine (2) within a tunnel portion (6e) of the footrest board (6), and provided with a flexible portion (52a) between a portion secured to the vehicle body frame (1) and the unit swing type engine (2), a rear end of the flexible portion (52a) is connected to the swing unit type engine (2),
**characterized in that** the intake port (52c) is made open upwards at a position corresponding to the top surface of the tunnel portion (6e).

2. A scooter type vehicle according to claim 1, **characterized in that** said external air introducing duct (52) is connected to a transmission chamber (52k) of V-belt transmission (2g) of the swing unit type engine (2).

3. A scooter type vehicle according to claim 1 or 2, **characterized in that** said flexible portion (52a) made of rubber.

4. A scooter type vehicle according to at least one of the claims 1 to 3,
**characterized in that** said secured portion is constituted by a rigid portion (52b) made of a plastic material.

5. A scooter type vehicle according to at least one of the claims 1 to 4,
**characterized in that** said secured portion is secured to the vehicle body frame (1) by a belt (53).

6. A scooter type vehicle according to at least one of the claims 1 to 5,
**characterized in that** a front half of the flexible portion (52a) is formed as bellows.

## Patentansprüche

1. Fahrzeug vom Roller- Typ mit einem Motor (2) vom Schwingeinheits- Typ und einem Motorkühlaufbau, wobei der Motor (2) vom Schwingeinheits- Typ für eine Auf- oder Ab- Bewegung mit einem Fahrzeugkarosserierahmen (1) gekuppelt ist, und ein Außenluft- Einleitungskanal (52) mit dem Motor (2) vom Schwingeinheits-Typ zum Kühlen des Motors (2) durch Ansaugen von Außenluft durch die Einlassöffnung (52c) des Außenluft- Einleitungskanals (52) verbunden ist, wobei der Außenluft- Einleitungskanal (52) nach vorwärts des Motors (2) vom Schwingeinheits- Typ innerhalb eines Tunnelabschnittes (6e) des Fußbrettes (6) erstreckt ist und mit einem flexiblen Abschnitt (52a) zwischen einem Abschnitt, befestigt an dem Fahrzeugkarosserierahmen (1) und dem Motor (2) vom Schwingeinheits-Typ angeordnet ist, wobei ein hinteres Ende des flexiblen Abschnittes (52a) mit dem Motor (2) vom Schwingeinheits- Typ verbunden ist;
**dadurch gekennzeichnet, dass** die Einlassöffnung (52c) veranlasst ist, sich nach oben zu öffnen an einer Position, die der oberen Oberfläche des Tunnelabschnittes (6e) entspricht.

2. Fahrzeug vom Roller- Typ nach Anspruch 1, **dadurch gekennzeichnet, dass** der Außenluft- Einleitungskanal (52) mit einer Getriebekammer (52k) des Keilriemengetriebes (2g) des Motors (2) vom Schwingeinheits- Typ verbunden ist.

3. Fahrzeug vom Roller- Typ nach Anspruch 1 oder 2, **dadurch gekennzeichnet, dass** der flexible Abschnitt (52a) aus Gummi hergestellt ist.

4. Fahrzeug vom Roller- Typ nach zumindest einem der Ansprüche 1 bis 3, **dadurch gekennzeichnet, dass** der befestigte Abschnitt durch einen starren Abschnitt (52b), hergestellt aus Kunststoff, gebildet ist.

5. Fahrzeug vom Roller- Typ nach zumindest einem der Ansprüche 1 bis 4, **dadurch gekennzeichnet, dass** der befestigte Abschnitt an dem Fahrzeugkarosserierahmen (1) durch einen Riemen (53) befestigt ist.

6. Fahrzeug vom Roller- Typ nach zumindest einem der Ansprüche 1 bis 5, **dadurch gekennzeichnet, dass** eine vordere Hälfte des flexiblen Abschnittes (52a) als ein Balg gebildet ist.

## Revendications

1. Véhicule de type scooter ayant un moteur de type oscillant unitaire (2) et une structure de refroidissement de moteur, dans lequel le moteur de type oscillant unitaire (2) est couplé pour un mouvement vers le haut et vers le bas à un châssis de carrosserie de véhicule (1), et un conduit d'introduction d'air extérieur (52) est relié au moteur de type oscillant unitaire (2) pour refroidir le moteur (2) en aspirant de l'air extérieur à travers l'orifice d'admission (52c) du conduit d'introduction d'air extérieur (52), le conduit d'introduction d'air extérieur (52) s'étend vers l'avant à partir du moteur du type oscillant unitaire (2) à l'intérieur d'une partie de tunnel (6e) de la plaque repose-pied (6), et comporte une partie souple (52a) entre une partie fixée sur le châssis de carrosserie de véhicule (1) et le moteur de type oscillant unitaire (2), une extrémité arrière de la partie souple (52a) est reliée au moteur de type oscillant unitaire (2),
**caractérisé en ce que** l'orifice d'admission (52c) est fabriqué ouvert vers le haut dans une position correspondant à la surface supérieure de la partie de tunnel (6e).

2. Véhicule de type scooter selon la revendication 1, **caractérisé en ce que** ledit conduit d'introduction d'air extérieur (52) est relié à une chambre de transmission (52k) d'une transmission à courroie trapézoïdale (2g) du moteur de type oscillant unitaire (2).

3. Véhicule de type scooter selon la revendication 1 ou 2, **caractérisé en ce que** ladite partie souple (52a) est fabriquée en caoutchouc.

4. Véhicule de type scooter selon au moins une des revendications 1 à 3, **caractérisé en ce que** ladite partie fixée est constituée par une partie rigide (52b) fabriquée en matière plastique.

5. Véhicule de type scooter selon au moins une des revendications 1 à 4, **caractérisé en ce que** ladite partie fixée est fixée sur le châssis de carrosserie de véhicule (1) par une courroie (53).

6. Véhicule de type scooter selon au moins une des revendications 1 à 5, **caractérisé en ce qu'**une moitié avant de la partie souple (52a) est formée comme un soufflet.
